# EUROPEAN PATENT APPLICATION

(11) **EP 4 615 152 A1**
(43) Date of publication of application: **10.09.2025**
(21) Application number: 22963850.7
(22) Date of filing: 01.11.2022
(51) Int. Cl.: H04W 76/28, H04L 1/1812

(54) **METHOD FOR STARTING OR RESTARTING SIDELINK HARQ RTT TIMER, AND APPARATUS**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2022/129105
(87) International publication number: WO 2024/092532

(57) **Abstract**

The present invention provides a method for starting or restarting a sidelink HARQ RTT timer, and an apparatus, which can be applied to a mobile communication technology. The method comprises: determining a physical sidelink feedback channel (PSFCH) resource associated with a physical sidelink shared channel (PSSCH); starting or restarting the sidelink HARQ RTT timer for the PSFCH resource associated with the PSSCH. The method can achieve starting or restarting of the HARQ RTT timer when a plurality of PSFCH resources are introduced.

## Description

### FIELD

The present invention relates to the field of communication technology, and in particular to a method and device for starting or restarting a sidelink HARQ RTT timer.

### BACKGROUND

A sidelink hybrid automatic repeat request round-trip time (HARQ RTT) timer is supported in discontinuous reception (DRX), and if there is no other timer that runs to make a terminal active during the operation of the sidelink HARQ RTT timer, the terminal may enter a sleep state.

### SUMMARY

Embodiments of a first aspect of the present invention provide a method for starting or restarting a sidelink HARQ RTT timer, performed by a terminal, which includes: determining a physical sidelink feedback channel (PSFCH) resource associated with a physical sidelink shared channel (PSSCH); and starting or restarting a sidelink HARQ RTT timer for the PSFCH resource associated with the PSSCH.

Embodiments of a second aspect of the present invention provide another communication device, which includes: a processing module, configured to: determine a physical sidelink feedback channel (PSFCH) resource associated with a physical sidelink shared channel (PSSCH); and start or restart a sidelink HARQ RTT timer for the PSFCH resource associated with the PSSCH.

Embodiments of a third aspect of the present invention provide a communication device, which includes a processor, and the processor is configured to perform the method as described in the first aspect above when the processor calls computer programs in a memory.

Embodiments of a fourth aspect of the present invention provide a communication device, which includes: a processor; and a memory having stored therein computer programs, and the processor is configured to execute the computer programs stored in the memory to cause the communication device to perform the method as described in the first aspect above.

Embodiments of a fifth aspect of the present invention provide another communication device, which includes a processor and an interface circuit, the interface circuit is configured to receive code instructions and transmit the code instructions to the processor, and the processor is configured to run the code instructions to cause the device to perform the method as described in the first aspect above.

Embodiments of a sixth aspect of the present invention provide a computer-readable storage medium having stored therein instructions for use by the communication device as described above, and the instructions, when executed, cause the communication device to perform the method as described in the first aspect above.

Embodiments of a seventh aspect of the present invention further provide a computer program product including computer programs that, when executed on a computer, cause the computer to perform the method as described in the first aspect above.

Embodiments of an eighth aspect of the present invention provide a chip system, which includes at least one processor and at least one interface, for supporting a communication device to implement the functions involved in the first aspect, for example, to determine or process at least one of data and information involved in the above method. In a possible design, the chip system further includes a memory configured to store computer programs and data necessary for the communication device. The chip system may be composed of chips, or may include chips and other discrete devices.

Embodiments of a ninth aspect of the present invention provide a computer program that, when executed on a computer, causes the computer to perform the method as described in the first aspect.

### BRIEF DESCRIPTION OF THE DRAWINGS

In order to clearly illustrate the technical solutions in embodiments of the present invention or in the related art, drawings to be used for the description of embodiments of the present invention or the related art are described below.
FIG. 1 is a schematic architecture diagram of a communication system according to embodiments of the present invention;
FIG. 2 is a schematic flowchart of a method for starting or restarting a sidelink HARQ RTT timer according to embodiments of the present invention;
FIG. 3 is a schematic flowchart of another method for starting or restarting a sidelink HARQ RTT timer according to embodiments of the present invention;
FIG. 4 is a schematic flowchart of another method for starting or restarting a sidelink HARQ RTT timer according to embodiments of the present invention;
FIG. 5 is a schematic flowchart of another method for starting or restarting a sidelink HARQ RTT timer according to embodiments of the present invention;
FIG. 6 is a schematic flowchart of another method for starting or restarting a sidelink HARQ RTT timer according to embodiments of the present invention;
FIG. 7 is a schematic flowchart of another method for starting or restarting a sidelink HARQ RTT timer according to embodiments of the present invention;
FIG. 8 is a schematic flowchart of another method for starting or restarting a sidelink HARQ RTT timer according to embodiments of the present invention;
FIG. 9 is a schematic flowchart of another method for starting or restarting a sidelink HARQ RTT timer according to embodiments of the present invention;
FIG. 10 is a schematic flowchart of another method for starting or restarting a sidelink HARQ RTT timer according to embodiments of the present invention;
FIG. 11 is a schematic flowchart of another method for starting or restarting a sidelink HARQ RTT timer according to embodiments of the present invention;
FIG. 12 is a schematic flowchart of another method for starting or restarting a sidelink HARQ RTT timer according to embodiments of the present invention;
FIG. 13 is a schematic flowchart of another method for starting or restarting a sidelink HARQ RTT timer according to embodiments of the present invention;
FIG. 14 is a schematic flowchart of another method for starting or restarting a sidelink HARQ RTT timer according to embodiments of the present invention;
FIG. 15 is a schematic flowchart of another method for starting or restarting a sidelink HARQ RTT timer according to embodiments of the present invention;
FIG. 16 is a schematic flowchart of another method for starting or restarting a sidelink HARQ RTT timer according to embodiments of the present invention;
FIG. 17 is a schematic flowchart of another method for starting or restarting a sidelink HARQ RTT timer according to embodiments of the present invention;
FIG. 18 is a schematic flowchart of another method for starting or restarting a sidelink HARQ RTT timer according to embodiments of the present invention;
FIG. 19 is a schematic flowchart of another method for starting or restarting a sidelink HARQ RTT timer according to embodiments of the present invention;
FIG. 20 is a schematic flowchart of another method for starting or restarting a sidelink HARQ RTT timer according to embodiments of the present invention;
FIG. 21 is a schematic flowchart of another method for starting or restarting a sidelink HARQ RTT timer according to embodiments of the present invention;
FIG. 22 is a schematic flowchart of another method for starting or restarting a sidelink HARQ RTT timer according to embodiments of the present invention;
FIG. 23 is a schematic flowchart of another method for starting or restarting a sidelink HARQ RTT timer according to embodiments of the present invention;
FIG. 24 is a schematic flowchart of another method for starting or restarting a sidelink HARQ RTT timer according to embodiments of the present invention;
FIG. 25 is a schematic block diagram of a communication device according to embodiments of the present invention;
FIG. 26 is a schematic block diagram of another communication device according to embodiments of the present invention; and
FIG. 27 is a schematic block diagram of a chip according to embodiments of the present invention.

### DETAILED DESCRIPTION

For better understanding of a method for starting or restarting a sidelink HARQ RTT timer disclosed in embodiments of the present invention, a communication system to which embodiments of the present invention are applicable is first described below.

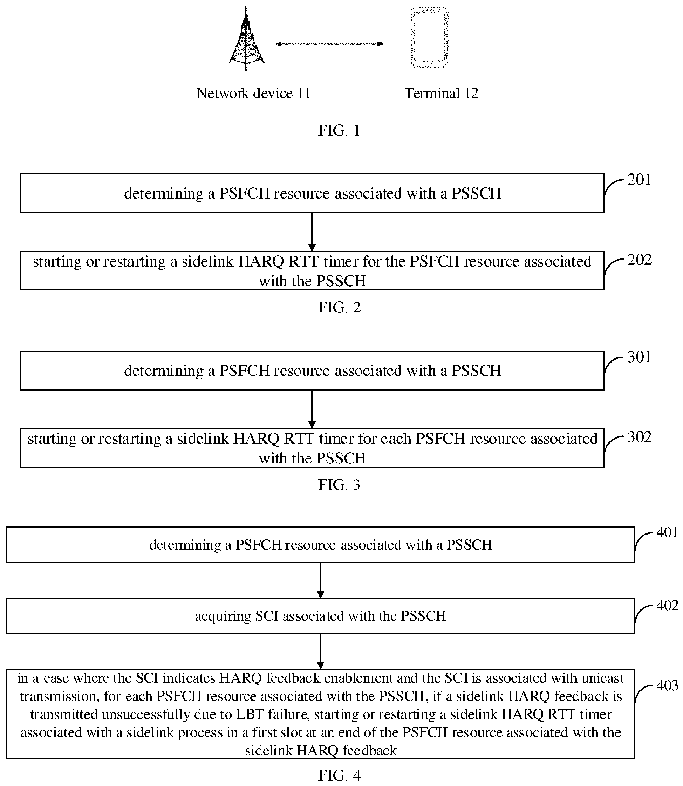

As shown in FIG. 1, FIG. 1 is a schematic architecture diagram of a communication system according to embodiments of the present invention. The communication system may include, but not limited to, a network device and a terminal. The number and forms of the devices shown in FIG. 1 are only used as an example and do not constitute a limitation on embodiments of the present invention. The communication system may include two or more network devices and two or more terminals in practical applications. As an example for illustration, the communication system shown in FIG. 1 includes one network device 11 and one terminal 12.

It should be noted that the technical solutions of embodiments of the present invention may be applied to various communication systems, for example, a long term evolution (LTE) system, a 5th generation (5G) mobile communication system, a 5G new radio (NR) system, or other new mobile communication systems in the future.

The network device 11 in embodiments of the present invention is an entity at a network side for sending or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system. Embodiments of the present invention do not limit the specific technique and specific device form adopted by the network device. The network device according to embodiments of the present invention may be composed of a central unit (CU) and distributed units (DUs). The CU may also be called a control unit. The CU-DU structure allows to split protocol layers of the network device, such as a base station, functions of some protocol layers are centrally controlled in the CU, functions of some or all of the remaining protocol layers are distributed in the DUs, and the CU centrally controls the DUs.

The terminal 12 in embodiments of the present invention is an entity at a user side for receiving or sending signals, such as a mobile phone. The terminal may also be called a terminal device, a user equipment (UE), a mobile station (MS), a mobile terminal (MT), and so on. The terminal may be a device with a communication function, such as a car, a smart car, a mobile phone, a wearable device, a tablet Pad, a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. Embodiments of the present invention do not limit the specific technique and the specific device form adopted by the terminal.

It can be understood that the communication system described in embodiments of the present invention is intended to illustrate the technical solutions of embodiments of the present invention more clearly, and does not constitute a limitation on the technical solutions according to embodiments of the present invention. Those of ordinary skill in the art know that with the evolution of the system architecture and the emergence of new service scenarios, the technical solutions according to embodiments of the present invention are also applicable to similar technical problems.

A sidelink HARQ RTT timer is supported in DRX, and if there is no other timer that runs to make a terminal active during the operation of the sidelink HARQ RTT timer, the terminal may enter a sleep state.

In sidelink communications, a physical sidelink shared channel (PSSCH) may be associated with a plurality of physical sidelink feedback channel (PSFCH) resources.

In the present invention, a terminal may determine the PSFCH resources associated with the PSSCH, and start or restart a sidelink HARQ RTT timer for the PSFCH resource associated with the PSSCH, so as to achieve the start or restart of a HARQ RTT timer in the case where a plurality of PSFCH resources are introduced.

A method and device for starting or restarting a sidelink HARQ RTT timer provided in the present invention will be described in detail below with reference to the accompanying drawings.

Referring to FIG. 2, which is a schematic flowchart of a method for starting or restarting a sidelink HARQ RTT timer according to embodiments of the present invention, the method is performed by a terminal. As shown in FIG. 2, the method may include but is not limited to the following steps.

In step 201, a PSFCH resource associated with a PSSCH is determined.

In the present invention, the PSFCH resource associated with the PSSCH may be configured for the terminal, so that during the sidelink communication, the terminal may determine the PSFCH resource associated with PSSCH according to the configuration of the PSFCH resource.

In the present invention, one PSSCH may be associated with one or more PSFCH resources.

In step 202, a sidelink HARQ RTT timer is started or restarted for the PSFCH resource associated with the PSSCH.

In the present invention, a sidelink HARQ RTT timer is started or restarted for each PSFCH resource associated with the PSSCH, or a sidelink HARQ RTT timer may also be started or restarted at an end of a transmission of a PSFCH resource with successful HARQ feedback, etc.

Optionally, for the PSFCH resource associated with the PSSCH, listen before talk (LBT) failure detection is performed before an HARQ feedback is performed. If the LBT failure causes the transmission failure of the HARQ feedback, a sidelink HARQ RTT timer may be started or restarted. For example, for a PSFCH resource, if LBT failure causes the transmission failure of the HARQ feedback, an HARQ RTT timer may be started in a first slot at an end of the PSFCH resource.

It should be noted that, in the present invention, the terminal may directly start or restart a sidelink HARQ RTT timer for the PSFCH resource associated with the PSSCH, without performing the step of determining the PSFCH resource associated with the PSSCH.

In embodiments of the present invention, the terminal may determine the PSFCH resource associated with the PSSCH, and start or restart the sidelink HARQ RTT timer for the PSFCH resource associated with the PSSCH, so that the sidelink HARQ RTT timer may be started or restarted in the case where a plurality of PSFCH resources are introduced.

Referring to FIG. 3, which is a schematic flowchart of another method for starting or restarting a sidelink HARQ RTT timer according to embodiments of the present invention, the method is performed by a terminal. As shown in FIG. 3, the method may include but is not limited to the following steps.

In step 301, a PSFCH resource associated with a PSSCH is determined.

In the present invention, the step 301 may be implemented in any manner as described in various embodiments of the present invention, which is not limited in the embodiments of the present invention and will not be elaborated again.

In step 302, a sidelink HARQ RTT timer is started or restarted for each PSFCH resource associated with the PSSCH.

In the present invention, the PSSCH may be associated with one or more PSFCH resources, and a sidelink HARQ RTT timer may be started or restarted for each PSFCH resource associated with the PSSCH. That is, for each PSFCH resource associated with PSSCH, LBT failure detection is performed before an HARQ feedback is performed, and a sidelink HARQ RTT timer is started or restarted for the PSFCH resource no matter the HARQ feedback is transmitted successfully or the HARQ feedback is transmitted unsuccessfully due to LBT failure. In embodiments of the present invention, the terminal may determine the PSFCH resource associated with the PSSCH, and start or restart a sidelink HARQ RTT timer for each PSFCH resource associated with the PSSCH, thereby increasing a duration during which the terminal is in a sleep state and saving resources.

Referring to FIG. 4, which is a schematic flowchart of another method for starting or restarting a sidelink HARQ RTT timer according to embodiments of the present invention, the method is performed by a terminal. As shown in FIG. 4, the method may include but is not limited to the following steps.

In step 401, a PSFCH resource associated with a PSSCH is determined.

In the present invention, the step 401 may be implemented in any manner as described in various embodiments of the present invention, which is not limited in the embodiments of the present invention and will not be elaborated again.

In step 402, sidelink control information (SCI) associated with the PSSCH is acquired.

In the present invention, a receiving terminal may acquire the sidelink control information (SCI) associated with the PSSCH from a transmitting terminal.

The SCI may include an indication of HARQ feedback enablement or HARQ feedback disablement for the PSSCH, an indication of a transmission mode, and other information. The HARQ feedback enablement means that an HARQ feedback on the PSSCH is required, and the HARQ feedback disablement means that an HARQ feedback is not performed for the PSSCH.

In step 403, in a case where the SCI indicates HARQ feedback enablement and the SCI is associated with unicast transmission, for each PSFCH resource associated with the PSSCH, if a sidelink HARQ feedback is transmitted unsuccessfully due to LBT failure, a sidelink HARQ RTT timer associated with a sidelink process is started or restarted in a first slot at an end of the PSFCH resource associated with the sidelink HARQ feedback.

In the present invention, in the case where the SCI indicates the HARQ feedback enablement and the SCI is associated with unicast transmission, for each PSFCH resource associated with the PSSCH, LBT failure detection may be performed before an HARQ feedback, if the sidelink HARQ feedback is transmitted unsuccessfully due to LBT failure, a sidelink HARQ RTT timer associated with a sidelink process is started or restarted in the first slot at the end of the PSFCH resource associated with the sidelink HARQ feedback, and the sidelink process is associated with the PSSCH.

For example, a certain PSSCH is associated with two PSFCH resources, in a case where the SCI indicates HARQ feedback enablement and the SCI is associated with unicast transmission, for a first PSFCH resource associated with the PSSCH, LBT failure detection is performed before an HARQ feedback, if the sidelink HARQ feedback is transmitted unsuccessfully due to LBT failure, a sidelink HARQ RTT timer associated with a sidelink process is started in a first slot at an end of the first PSFCH resource, and then a second PSFCH resource performs an HARQ feedback, and LBT failure detection is performed before the HARQ feedback, if the sidelink HARQ feedback is transmitted unsuccessfully due to LBT failure, a sidelink HARQ RTT timer associated with a sidelink process is restarted in a first slot at an end of the second PSFCH resource.

In embodiments of the present invention, the terminal may determine the PSFCH resource associated with the PSSCH and acquire the SCI associated with the PSSCH, in the case where the SCI indicates the HARQ feedback enablement and the SCI is associated with unicast transmission, for each PSFCH resource associated with the PSSCH, if the sidelink HARQ feedback is transmitted unsuccessfully due to LBT failure, a sidelink HARQ RTT timer associated with the sidelink process is started or restarted in the first slot at the end of the PSFCH resource associated with the sidelink HARQ feedback, the sidelink process is associated with the PSSCH, thereby increasing the duration during which the terminal is in a sleep state and saving resources.

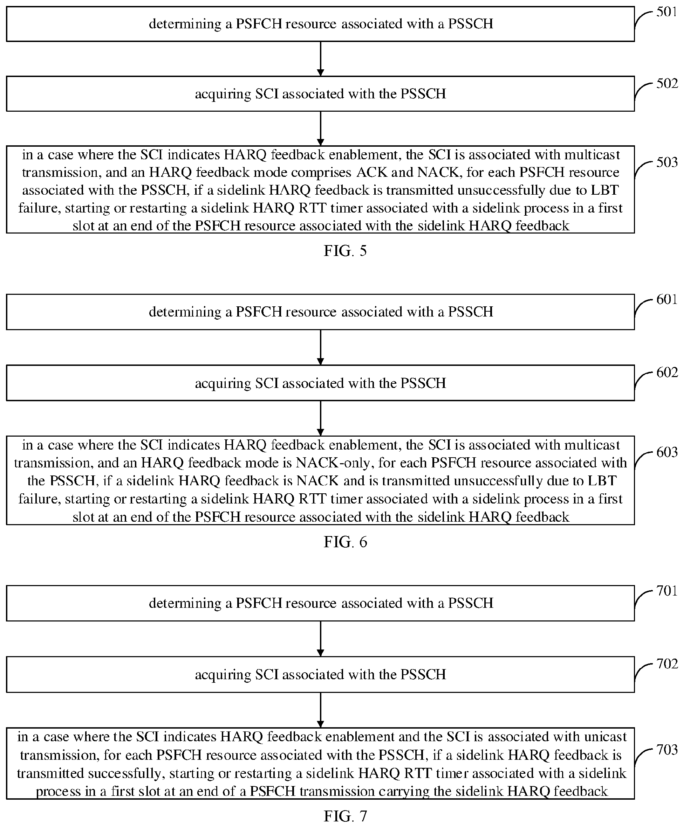

Referring to FIG. 5, which is a schematic flowchart of another method for starting or restarting a sidelink HARQ RTT timer according to embodiments of the present invention, the method is performed by a terminal. As shown in FIG. 5, the method may include but is not limited to the following steps.

In step 501, a PSFCH resource associated with a PSSCH is determined.

In step 502, SCI associated with the PSSCH is acquired.

In the present invention, the steps 501-502 each may be implemented in any manner as described in various embodiments of the present invention, which is not limited in the embodiments of the present invention and will not be elaborated again.

In step 503, in a case where the SCI indicates HARQ feedback enablement, the SCI is associated with multicast transmission, and an HARQ feedback mode comprises positive acknowledgment (ACK) and negative acknowledgment (NACK), for each PSFCH resource associated with the PSSCH, if a sidelink HARQ feedback is transmitted unsuccessfully due to LBT failure, a sidelink HARQ RTT timer associated with a sidelink process is started or restarted in a first slot at an end of the PSFCH resource associated with the sidelink HARQ feedback.

In the present invention, the HARQ feedback mode for the multicast transmission may include positive-negative acknowledgement (including positive acknowledgement (ACK) and negative acknowledgement (NACK)) and negative-only acknowledgement (NACK-only).

The ACK-NACK mode means that an HARQ feedback may carry ACK or NACK; and the NACK-only mode means that an HARQ feedback may only carry NACK.

In the present invention, the HARQ feedback mode used for the HARQ feedback for the multicast transmission may be selected by the terminal according to conditions.

In the present invention, in the case where the SCI indicates the HARQ feedback enablement, the SCI is associated with multicast transmission, and the HARQ feedback mode comprises ACK and NACK, for each PSFCH resource associated with the PSSCH, LBT failure detection is performed before an HARQ feedback, and if the sidelink HARQ feedback is transmitted unsuccessfully due to LBT failure, a sidelink HARQ RTT timer associated with the sidelink process is started or restarted in the first slot at the end of the PSFCH resource associated with the sidelink HARQ feedback. The sidelink process is associated with the PSSCH.

In embodiments of the present invention, the terminal may determine the PSFCH resource associated with the PSSCH and acquire the SCI associated with the PSSCH, in the case where the SCI indicates the HARQ feedback enablement, the SCI is associated with multicast transmission, and the HARQ feedback mode comprises ACK and NACK, for each PSFCH resource associated with the PSSCH, if the sidelink HARQ feedback is transmitted unsuccessfully due to LBT failure, a sidelink HARQ RTT timer associated with the sidelink process is started or restarted in the first slot at the end of the PSFCH resource associated with the sidelink HARQ feedback, thereby increasing the duration during which the terminal is in a sleep state and saving resources.

Referring to FIG. 6, which is a schematic flowchart of another method for starting or restarting a sidelink HARQ RTT timer according to embodiments of the present invention, the method is performed by a terminal. As shown in FIG. 6, the method may include but is not limited to the following steps.

In step 601, a PSFCH resource associated with a PSSCH is determined.

In step 602, SCI associated with the PSSCH is acquired.

In the present invention, the steps 601-602 each may be implemented in any manner as described in various embodiments of the present invention, which is not limited in the embodiments of the present invention and will not be elaborated again.

In step 603, in a case where the SCI indicates HARQ feedback enablement, the SCI is associated with multicast transmission, and an HARQ feedback mode is NACK-only, for each PSFCH resource associated with the PSSCH, if a sidelink HARQ feedback is NACK and is transmitted unsuccessfully due to LBT failure, a sidelink HARQ RTT timer associated with a sidelink process is started or restarted in a first slot at an end of the PSFCH resource associated with the sidelink HARQ feedback.

In the present invention, in the case where the SCI indicates the HARQ feedback enablement, the SCI is associated with multicast transmission, and the HARQ feedback mode is NACK-only, if a sidelink HARQ feedback is NACK, for each PSFCH resource associated with the PSSCH, LBT failure detection is performed before an HARQ feedback, and if the sidelink HARQ feedback is transmitted unsuccessfully due to LBT failure, a sidelink HARQ RTT timer associated with a sidelink process is started or restarted in the first slot at the end of the PSFCH resource associated with the sidelink HARQ feedback. The sidelink process is associated with the PSSCH.

In embodiments of the present invention, the terminal may determine the PSFCH resource associated with the PSSCH and acquire the SCI associated with the PSSCH, in the case where the SCI indicates the HARQ feedback enablement, the SCI is associated with multicast transmission, and the HARQ feedback mode is NACK-only, for each PSFCH resource associated with the PSSCH, if a sidelink HARQ feedback is NACK and is transmitted unsuccessfully due to LBT failure, a sidelink HARQ RTT timer associated with the sidelink process is started or restarted in the first slot at the end of the PSFCH resource associated with the sidelink HARQ feedback. The sidelink process is associated with the PSSCH, thereby increasing the duration during which the terminal is in a sleep state and saving resources.

Referring to FIG. 7, which is a schematic flowchart of another method for starting or restarting a sidelink HARQ RTT timer according to embodiments of the present invention, the method is performed by a terminal. As shown in FIG. 7, the method may include but is not limited to the following steps.

In step 701, a PSFCH resource associated with a PSSCH is determined.

In step 702, SCI associated with the PSSCH is acquired.

In the present invention, the steps 701-702 each may be implemented in any manner as described in various embodiments of the present invention, which is not limited in the embodiments of the present invention and will not be elaborated again.

In step 703, in a case where the SCI indicates HARQ feedback enablement and the SCI is associated with unicast transmission, for each PSFCH resource associated with the PSSCH, if a sidelink HARQ feedback is transmitted successfully, a sidelink HARQ RTT timer associated with a sidelink process is started or restarted in a first slot at an end of a PSFCH transmission carrying the sidelink HARQ feedback.

In the present invention, in the case where the SCI indicates the HARQ feedback enablement and the SCI is associated with unicast transmission, for each PSFCH resource associated with the PSSCH, if a sidelink HARQ feedback is transmitted successfully, a sidelink HARQ RTT timer associated with the sidelink process may be started or restarted in the first slot at the end of the PSFCH transmission carrying the sidelink HARQ feedback. The sidelink process is associated with the PSSCH.

For example, for each PSFCH resource associated with the PSSCH, LBT failure detection is performed before an HARQ feedback, and if the LBT is successful, the HARQ feedback is sent. If the LBT is successful, it may be considered that the sidelink HARQ feedback is transmitted successfully, and a sidelink HARQ RTT timer associated with the sidelink process may be started or restarted in the first slot at the end of the PSFCH transmission carrying the sidelink HARQ feedback.

For example, a certain PSSCH is associated with two PSFCH resources, in the case where the SCI indicates the HARQ feedback enablement and the SCI is associated with unicast transmission, for a first PSFCH resource associated with the PSSCH, if a sidelink HARQ feedback is transmitted successfully, a sidelink HARQ RTT timer associated with a sidelink process is started in a first slot at an end of a first PSFCH transmission, and then a second PSFCH resource performs an HARQ feedback, and if the sidelink HARQ feedback is transmitted successfully, a sidelink HARQ RTT timer associated with a sidelink process is restarted in a first slot at an end of a second PSFCH transmission.

Optionally, in the case where the SCI indicates the HARQ feedback enablement and the SCI is associated with unicast transmission, if a sidelink HARQ feedback is transmitted unsuccessfully due to LBT failure, a sidelink HARQ RTT timer associated with a sidelink process may be started or restarted in a first slot at an end of a PSFCH resource associated with the sidelink HARQ feedback.

For example, a certain PSSCH is associated with three PSFCH resources, in the case where the SCI indicates the HARQ feedback enablement and the SCI is associated with unicast transmission, for a first PSFCH resource associated with the PSSCH, if a sidelink HARQ feedback is transmitted unsuccessfully due to LBT failure, a sidelink HARQ RTT timer associated with a sidelink process is started in a first slot at an end of the first PSFCH resource, and then a second PSFCH resource performs an HARQ feedback, if the sidelink HARQ feedback is transmitted successfully, a sidelink HARQ RTT timer associated with a sidelink process is restarted in a first slot at an end of a second PSFCH transmission, and then a third PSFCH resource performs an HARQ feedback, if the sidelink HARQ feedback is transmitted unsuccessfully due to LBT failure, a sidelink HARQ RTT timer associated with a sidelink process is restarted in a first slot at an end of the third PSFCH resource.

Optionally, in the case where the SCI indicates the HARQ feedback enablement and the SCI is associated with unicast transmission, for each PSFCH resource before a PSFCH resource which successfully transmits an HARQ feedback, a sidelink HARQ RTT timer may be started or restarted, and for a PSFCH resource behind a PSFCH resource which successfully transmits a sidelink HARQ feedback, a sidelink HARQ feedback may not be sent to save resources.

For example, a certain PSSCH is associated with 4 PSFCH resources, in the case where the SCI indicates the HARQ feedback enablement and the SCI is associated with unicast transmission, for a first PSFCH resource associated with the PSSCH, if a sidelink HARQ feedback is transmitted unsuccessfully due to LBT failure, a sidelink HARQ RTT timer associated with a sidelink process is started in a first slot at an end of the first PSFCH resource, and then a second PSFCH resource performs an HARQ feedback, if a sidelink HARQ feedback is transmitted successfully, a sidelink HARQ RTT timer associated with a sidelink process is restarted in a first slot at an end of a second PSFCH transmission, and then a third PSFCH resource and a fourth PSFCH resource do not send a sidelink HARQ feedback, and a sidelink HARQ RTT timer associated with a sidelink process is not restarted in a first slot at an end of each of the third PSFCH resource and the fourth PSFCH resource.

In embodiments of the present invention, the terminal may determine the PSFCH resource associated with the PSSCH and acquire the SCI associated with the PSSCH, in the case where the SCI indicates the HARQ feedback enablement and the SCI is associated with unicast transmission, for each PSFCH resource associated with the PSSCH, if the sidelink HARQ feedback is transmitted successfully, a sidelink HARQ RTT timer associated with the sidelink process is started or restarted in the first slot at the end of the PSFCH transmission carrying the sidelink HARQ feedback, thereby increasing the duration during which the terminal is in a sleep state and saving resources.

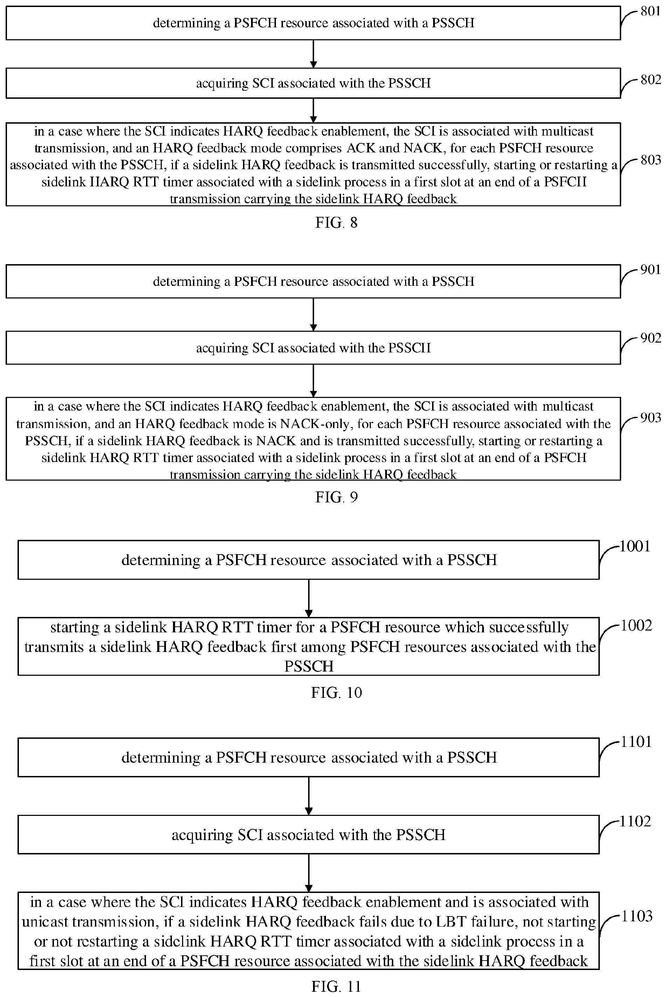

Referring to FIG. 8, which is a schematic flowchart of another method for starting or restarting a sidelink HARQ RTT timer according to embodiments of the present invention, the method is performed by a terminal. As shown in FIG. 7, the method may include but is not limited to the following steps.

In step 801, a PSFCH resource associated with a PSSCH is determined.

In step 802, SCI associated with the PSSCH is acquired.

In the present invention, the steps 801-802 each may be implemented in any manner as described in various embodiments of the present invention, which is not limited in the embodiments of the present invention and will not be elaborated again.

In step 803, in a case where the SCI indicates HARQ feedback enablement, the SCI is associated with multicast transmission, and an HARQ feedback mode includes ACK and NACK, for each PSFCH resource associated with the PSSCH, if a sidelink HARQ feedback is transmitted successfully, a sidelink HARQ RTT timer associated with a sidelink process is started or restarted in a first slot at an end of a PSFCH transmission carrying the sidelink HARQ feedback.

In the present invention, in the case where the SCI indicates the HARQ feedback enablement, the SCI is associated with multicast transmission, and the HARQ feedback mode includes ACK and NACK, for each PSFCH resource associated with the PSSCH, if a sidelink HARQ feedback is transmitted successfully, a sidelink HARQ RTT timer associated with the sidelink process may be started or restarted in the first slot at the end of the PSFCH transmission carrying the sidelink HARQ feedback. The sidelink process is associated with the PSSCH.

For example, a certain PSSCH is associated with two PSFCH resources, in the case where the SCI indicates the HARQ feedback enablement, the SCI is associated with multicast transmission, and the HARQ feedback mode includes ACK and NACK, for a first PSFCH resource associated with the PSSCH, if a sidelink HARQ feedback is transmitted successfully, a sidelink HARQ RTT timer associated with a sidelink process is started in a first slot at an end of a first PSFCH transmission, and then a second PSFCH resource performs an HARQ feedback, and if the sidelink HARQ feedback is transmitted successfully, a sidelink HARQ RTT timer associated with a sidelink process is restarted in a first slot at an end of a second PSFCH transmission.

Optionally, in the case where the SCI indicates the HARQ feedback enablement, the SCI is associated with multicast transmission, and the HARQ feedback mode includes ACK and NACK, if a sidelink HARQ feedback is transmitted unsuccessfully due to LBT failure, a sidelink HARQ RTT timer associated with a sidelink process may be started or restarted in a first slot at an end of a PSFCH resource associated with the sidelink HARQ feedback.

For example, a certain PSSCH is associated with three PSFCH resources, in the case where the SCI indicates the HARQ feedback enablement, the SCI is associated with multicast transmission, and the HARQ feedback mode includes ACK and NACK, for a first PSFCH resource associated with the PSSCH, if a sidelink HARQ feedback is transmitted unsuccessfully due to LBT failure, a sidelink HARQ RTT timer associated with a sidelink process is started in a first slot at an end of the first PSFCH resource, and then a second PSFCH resource performs an HARQ feedback, if the sidelink HARQ feedback is transmitted successfully, a sidelink HARQ RTT timer associated with a sidelink process is restarted in a first slot at an end of a second PSFCH transmission, and then a third PSFCH resource performs an HARQ feedback, if the sidelink HARQ feedback is transmitted unsuccessfully due to LBT failure, a sidelink HARQ RTT timer associated with a sidelink process is restarted in a first slot at an end of the third PSFCH resource.

Optionally, in the case where the SCI indicates the HARQ feedback enablement, the SCI is associated with multicast transmission, and the HARQ feedback mode includes ACK and NACK, for each PSFCH resource before a PSFCH resource which successfully transmits an HARQ feedback, a sidelink HARQ RTT timer may be started or restarted, and for a PSFCH resource behind a PSFCH resource which successfully transmits a sidelink HARQ feedback, a sidelink HARQ feedback may not be sent to save resources.

For example, a certain PSSCH is associated with 4 PSFCH resources, in the case where the SCI indicates the HARQ feedback enablement, the SCI is associated with multicast transmission, and the HARQ feedback mode includes ACK and NACK, for a first PSFCH resource associated with the PSSCH, if a sidelink HARQ feedback is transmitted unsuccessfully due to LBT failure, a sidelink HARQ RTT timer associated with a sidelink process is started in a first slot at an end of the first PSFCH resource, and then a second PSFCH resource performs an HARQ feedback, if a sidelink HARQ feedback is transmitted successfully, a sidelink HARQ RTT timer associated with a sidelink process is restarted in a first slot at an end of a second PSFCH transmission, and then a third PSFCH resource and a fourth PSFCH resource do not send a sidelink HARQ feedback, and a sidelink HARQ RTT timer associated with a sidelink process is not restarted in a first slot at an end of each of the third PSFCH resource and the fourth PSFCH resource.

In embodiments of the present invention, the terminal may determine the PSFCH resource associated with the PSSCH and acquire the SCI associated with the PSSCH, in the case where the SCI indicates the HARQ feedback enablement, the SCI is associated with multicast transmission, and the HARQ feedback mode includes ACK and NACK, for each PSFCH resource associated with the PSSCH, if the sidelink HARQ feedback is transmitted successfully, a sidelink HARQ RTT timer associated with the sidelink process is started or restarted in the first slot at the end of the PSFCH transmission carrying the sidelink HARQ feedback, thereby increasing the duration during which the terminal is in a sleep state and saving resources.

Referring to FIG. 9, which is a schematic flowchart of another method for starting or restarting a sidelink HARQ RTT timer according to embodiments of the present invention, the method is performed by a terminal. As shown in FIG. 9, the method may include but is not limited to the following steps.

In step 901, a PSFCH resource associated with a PSSCH is determined.

In step 902, SCI associated with the PSSCH is acquired.

In the present invention, the steps 901-902 each may be implemented in any manner as described in various embodiments of the present invention, which is not limited in the embodiments of the present invention and will not be elaborated again.

In step 903, in a case where the SCI indicates HARQ feedback enablement, the SCI is associated with multicast transmission, and an HARQ feedback mode is NACK-only, for each PSFCH resource associated with the PSSCH, if a sidelink HARQ feedback is NACK and is transmitted successfully, a sidelink HARQ RTT timer associated with a sidelink process is started or restarted in a first slot at an end of a PSFCH transmission carrying the sidelink HARQ feedback.

In the present invention, in the case where the SCI indicates the HARQ feedback enablement, the SCI is associated with multicast transmission, and the HARQ feedback mode is NACK-only, for each PSFCH resource associated with the PSSCH, if a sidelink HARQ feedback is NACK and is transmitted successfully, a sidelink HARQ RTT timer associated with the sidelink process may be started or restarted in the first slot at the end of the PSFCH transmission carrying the sidelink HARQ feedback. The sidelink process is associated with the PSSCH.

For example, a certain PSSCH is associated with two PSFCH resources, in the case where the SCI indicates the HARQ feedback enablement, the SCI is associated with multicast transmission, and the HARQ feedback mode is NACK-only, if an HARQ feedback is NACK, for a first PSFCH resource associated with the PSSCH, if a sidelink HARQ feedback is transmitted successfully, a sidelink HARQ RTT timer associated with a sidelink process is started in a first slot at an end of a first PSFCH transmission, and then a second PSFCH resource performs an HARQ feedback, and if the sidelink HARQ feedback is transmitted successfully, a sidelink HARQ RTT timer associated with a sidelink process is restarted in a first slot at an end of a second PSFCH transmission.

Optionally, in the case where the SCI indicates the HARQ feedback enablement, the SCI is associated with multicast transmission, and the HARQ feedback mode is NACK-only, if an HARQ feedback is NACK, and a sidelink HARQ feedback is transmitted unsuccessfully due to LBT failure, a sidelink HARQ RTT timer associated with a sidelink process may be started or restarted in a first slot at an end of a PSFCH resource associated with the sidelink HARQ feedback.

For example, a certain PSSCH is associated with three PSFCH resources, in the case where the SCI indicates the HARQ feedback enablement, the SCI is associated with multicast transmission, and the HARQ feedback mode is NACK-only, if an HARQ feedback is NACK, for a first PSFCH resource associated with the PSSCH, if a sidelink HARQ feedback is transmitted unsuccessfully due to LBT failure, a sidelink HARQ RTT timer associated with a sidelink process is started in a first slot at an end of the first PSFCH resource, and then a second PSFCH resource performs an HARQ feedback, if the sidelink HARQ feedback is transmitted successfully, a sidelink HARQ RTT timer associated with a sidelink process is restarted in a first slot at an end of a second PSFCH transmission, and then a third PSFCH resource performs an HARQ feedback, if the sidelink HARQ feedback is transmitted unsuccessfully due to LBT failure, a sidelink HARQ RTT timer associated with a sidelink process is restarted in a first slot at an end of the third PSFCH resource.

Optionally, in the case where the SCI indicates the HARQ feedback enablement, the SCI is associated with multicast transmission, and the HARQ feedback mode includes ACK and NACK, if an HARQ feedback is NACK, for each PSFCH resource before a PSFCH resource which successfully transmits an HARQ feedback, a sidelink HARQ RTT timer may be started or restarted, and for a PSFCH resource behind a PSFCH resource which successfully transmits a sidelink HARQ feedback, a sidelink HARQ feedback may not be sent to save resources.

For example, a certain PSSCH is associated with 4 PSFCH resources, in the case where the SCI indicates the HARQ feedback enablement, the SCI is associated with multicast transmission, and the HARQ feedback mode includes ACK and NACK, if an HARQ feedback is NACK, for a first PSFCH resource associated with the PSSCH, if a sidelink HARQ feedback is transmitted unsuccessfully due to LBT failure, a sidelink HARQ RTT timer associated with a sidelink process is started in a first slot at an end of the first PSFCH resource, and then a second PSFCH resource performs an HARQ feedback, if a sidelink HARQ feedback is transmitted successfully, a sidelink HARQ RTT timer associated with a sidelink process is restarted in a first slot at an end of a second PSFCH transmission, and then a third PSFCH resource and a fourth PSFCH resource do not send a sidelink HARQ feedback, and a sidelink HARQ RTT timer associated with a sidelink process is not restarted in a first slot at an end of each of the third PSFCH resource and the fourth PSFCH resource.

In embodiments of the present invention, the terminal may determine the PSFCH resource associated with the PSSCH and acquire the SCI associated with the PSSCH, in the case where the SCI indicates the HARQ feedback enablement, the SCI is associated with multicast transmission, and the HARQ feedback mode is NACK-only, for each PSFCH resource associated with the PSSCH, if the sidelink HARQ feedback is NACK and is transmitted successfully, a sidelink HARQ RTT timer associated with the sidelink process is started or restarted in the first slot at the end of the PSFCH transmission carrying the sidelink HARQ feedback, thereby increasing the duration during which the terminal is in a sleep state and saving resources.

Referring to FIG. 10, which is a schematic flowchart of another method for starting or restarting a sidelink HARQ RTT timer according to embodiments of the present invention, the method is performed by a terminal. As shown in FIG. 10, the method may include but is not limited to the following steps.

In step 1001, a PSFCH resource associated with a PSSCH is determined.

In the present invention, the step 1001 may be implemented in any manner as described in various embodiments of the present invention, which is not limited in the embodiments of the present invention and will not be elaborated again.

In step 1002, a sidelink HARQ RTT timer is started for a PSFCH resource which successfully transmits a sidelink HARQ feedback first among PSFCH resources associated with the PSSCH.

In the present invention, a sidelink HARQ RTT timer is started for the PSFCH resource which successfully transmits the sidelink HARQ feedback first among PSFCH resources associated with the PSSCH.

For example, a certain PSSCH is associated with three PSFCH resources, for a first PSFCH resource associated with the PSSCH, an HARQ feedback is transmitted unsuccessfully due to LBT failure, while a second PSFCH resource transmits a sidelink HARQ feedback successfully, then a sidelink HARQ RTT timer is started for the second PSFCH resource.

In embodiments of the present invention, the terminal may determine the PSFCH resource associated with the PSSCH, and start a sidelink HARQ RTT timer for the PSFCH resource which successfully transmits the sidelink HARQ feedback first among PSFCH resources associated with the PSSCH, thereby reducing the number of times the sidelink HARQ RTT timer is started, making the implementation simple.

Referring to FIG. 11, which is a schematic flowchart of another method for starting or restarting a sidelink HARQ RTT timer according to embodiments of the present invention, the method is performed by a terminal. As shown in FIG. 11, the method may include but is not limited to the following steps.

In step 1101, a PSFCH resource associated with a PSSCH is determined.

In step 1102, SCI associated with the PSSCH is acquired.

In the present invention, the steps 1101-1102 each may be implemented in any manner as described in various embodiments of the present invention, which is not limited in the embodiments of the present invention and will not be elaborated again.

In step 1103, in a case where the SCI indicates HARQ feedback enablement and the SCI is associated with unicast transmission, if a sidelink HARQ feedback fails due to LBT failure, a sidelink HARQ RTT timer associated with a sidelink process is not started or restarted in a first slot at an end of a PSFCH resource associated with the sidelink HARQ feedback.

In the present invention, in the case where the SCI indicates the HARQ feedback enablement and the SCI is associated with unicast transmission, if a sidelink HARQ feedback fails due to LBT failure, the sidelink HARQ RTT timer associated with the sidelink process may not started or restarted in the first slot at the end of the PSFCH resource associated with the sidelink HARQ feedback. The sidelink process is associated with the PSSCH.

For example, a certain PSSCH is associated with three PSFCH resources, in the case where the SCI indicates the HARQ feedback enablement and the SCI is associated with unicast transmission, for a first PSFCH resource associated with the PSSCH, an HARQ feedback is transmitted unsuccessfully due to LBT failure, and the sidelink HARQ RTT timer associated with the sidelink process may not started in a first slot at an end of the first PSFCH resource, and then a second PSFCH resource transmits an HARQ feedback, if the HARQ feedback is transmitted unsuccessfully due to LBT failure, the sidelink HARQ RTT timer associated with the sidelink process may not started in a first slot at an end of the second PSFCH resource.

In embodiments of the present invention, the terminal may determine the PSFCH resource associated with the PSSCH and acquire the SCI associated with the PSSCH, in the case where the SCI indicates the HARQ feedback enablement and the SCI is associated with unicast transmission, if a sidelink HARQ feedback fails due to LBT failure, the sidelink HARQ RTT timer associated with the sidelink process is not started or restarted in the first slot at the end of the PSFCH resource associated with the sidelink HARQ feedback, thereby reducing the number of times the sidelink HARQ RTT timer is started, making the implementation simple.

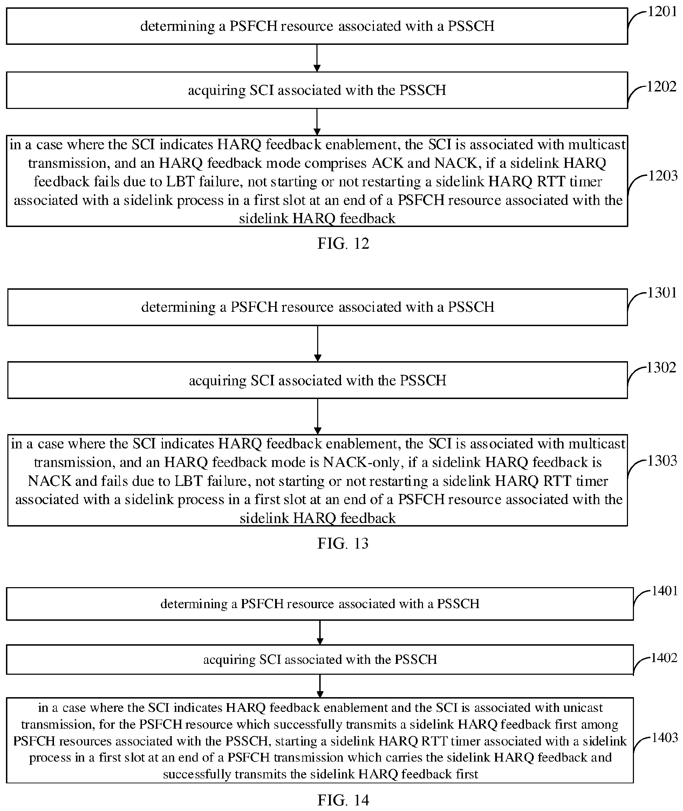

Referring to FIG. 12, which is a schematic flowchart of another method for starting or restarting a sidelink HARQ RTT timer according to embodiments of the present invention, the method is performed by a terminal. As shown in FIG. 12, the method may include but is not limited to the following steps.

In step 1201, a PSFCH resource associated with a PSSCH is determined.

In step 1202, SCI associated with the PSSCH is acquired.

In the present invention, the steps 1201-1202 each may be implemented in any manner as described in various embodiments of the present invention, which is not limited in the embodiments of the present invention and will not be elaborated again.

In step 1203, in a case where the SCI indicates HARQ feedback enablement, the SCI is associated with multicast transmission, and an HARQ feedback mode includes ACK and NACK, if a sidelink HARQ feedback fails due to LBT failure, a sidelink HARQ RTT timer associated with a sidelink process is not started or restarted in a first slot at an end of a PSFCH resource associated with the sidelink HARQ feedback.

In the present invention, in the case where the SCI indicates the HARQ feedback enablement, the SCI is associated with the multicast transmission, and the HARQ feedback mode includes ACK and NACK, if a sidelink HARQ feedback fails due to LBT failure, the sidelink HARQ RTT timer associated with the sidelink process may not started or restarted in the first slot at the end of the PSFCH resource associated with the sidelink HARQ feedback. The sidelink process is associated with the PSSCH.

For example, a certain PSSCH is associated with three PSFCH resources, in the case where the SCI indicates the HARQ feedback enablement, the SCI is associated with the multicast transmission, and the HARQ feedback mode includes ACK and NACK, for a first PSFCH resource associated with the PSSCH, an HARQ feedback is transmitted unsuccessfully due to LBT failure, and the sidelink HARQ RTT timer associated with the sidelink process may not started in a first slot at an end of the first PSFCH resource, and then a second PSFCH resource transmits an HARQ feedback, if the HARQ feedback is transmitted unsuccessfully due to LBT failure, the sidelink HARQ RTT timer associated with the sidelink process may not started in a first slot at an end of the second PSFCH resource.

In embodiments of the present invention, the terminal may determine the PSFCH resource associated with the PSSCH and acquire the SCI associated with the PSSCH, in the case where the SCI indicates the HARQ feedback enablement, the SCI is associated with the multicast transmission, and the HARQ feedback mode includes ACK and NACK, if a sidelink HARQ feedback fails due to LBT failure, the sidelink HARQ RTT timer associated with the sidelink process is not started or restarted in the first slot at the end of the PSFCH resource associated with the sidelink HARQ feedback, thereby reducing the number of times the sidelink HARQ RTT timer is started, making the implementation simple.

Referring to FIG. 13, which is a schematic flowchart of another method for starting or restarting a sidelink HARQ RTT timer according to embodiments of the present invention, the method is performed by a terminal. As shown in FIG. 13, the method may include but is not limited to the following steps.

In step 1301, a PSFCH resource associated with a PSSCH is determined.

In step 1302, SCI associated with the PSSCH is acquired.

In the present invention, the steps 1301-1302 each may be implemented in any manner as described in various embodiments of the present invention, which is not limited in the embodiments of the present invention and will not be elaborated again.

In step 1303, in a case where the SCI indicates HARQ feedback enablement, the SCI is associated with multicast transmission, and an HARQ feedback mode is NACK-only, if a sidelink HARQ feedback is NACK and fails due to LBT failure, a sidelink HARQ RTT timer associated with a sidelink process is not started or restarted in a first slot at an end of a PSFCH resource associated with the sidelink HARQ feedback.

In the present invention, in the case where the SCI indicates the HARQ feedback enablement, the SCI is associated with the multicast transmission, and the HARQ feedback mode is NACK-only, if a sidelink HARQ feedback is NACK and fails due to LBT failure, the sidelink HARQ RTT timer associated with the sidelink process may not started or restarted in the first slot at the end of the PSFCH resource associated with the sidelink HARQ feedback. The sidelink process is associated with the PSSCH.

For example, a certain PSSCH is associated with three PSFCH resources, in the case where the SCI indicates the HARQ feedback enablement, the SCI is associated with the multicast transmission, and the HARQ feedback mode includes ACK and NACK, if a sidelink HARQ feedback is NACK, for a first PSFCH resource associated with the PSSCH, an HARQ feedback is transmitted unsuccessfully due to LBT failure, and the sidelink HARQ RTT timer associated with the sidelink process may not started in a first slot at an end of the first PSFCH resource, and then a second PSFCH resource transmits an HARQ feedback, if the HARQ feedback is transmitted unsuccessfully due to LBT failure, the sidelink HARQ RTT timer associated with the sidelink process may not started in a first slot at an end of the second PSFCH resource.

In embodiments of the present invention, the terminal may determine the PSFCH resource associated with the PSSCH and acquire the SCI associated with the PSSCH, in the case where the SCI indicates the HARQ feedback enablement, the SCI is associated with the multicast transmission, and the HARQ feedback mode is NACK-only, if a sidelink HARQ feedback is NACK and fails due to LBT failure, the sidelink HARQ RTT timer associated with the sidelink process is not started or restarted in the first slot at the end of the PSFCH resource associated with the sidelink HARQ feedback, thereby reducing the number of times the sidelink HARQ RTT timer is started, making the implementation simple.

Referring to FIG. 14, which is a schematic flowchart of another method for starting or restarting a sidelink HARQ RTT timer according to embodiments of the present invention, the method is performed by a terminal. As shown in FIG. 14, the method may include but is not limited to the following steps.

In step 1401, a PSFCH resource associated with a PSSCH is determined.

In step 1402, SCI associated with the PSSCH is acquired.

In the present invention, the steps 1401-1402 each may be implemented in any manner as described in various embodiments of the present invention, which is not limited in the embodiments of the present invention and will not be elaborated again.

In step 1403, in a case where the SCI indicates HARQ feedback enablement and the SCI is associated with unicast transmission, for a PSFCH resource which successfully transmits a sidelink HARQ feedback first among PSFCH resources associated with the PSSCH, a sidelink HARQ RTT timer associated with a sidelink process is started in a first slot at an end of a PSFCH transmission which carries the sidelink HARQ feedback and successfully transmits the sidelink HARQ feedback first.

In the present invention, in the case where the SCI indicates the HARQ feedback enablement and the SCI is associated with unicast transmission, for the PSFCH resource which successfully transmits a sidelink HARQ feedback first among PSFCH resources associated with the PSSCH, the sidelink HARQ RTT timer associated with the sidelink process is started in the first slot at the end of the PSFCH transmission which carries the sidelink HARQ feedback and successfully transmits the sidelink HARQ feedback first. The sidelink process is associated with the PSSCH.

For example, a certain PSSCH is associated with three PSFCH resources, in the case where the SCI indicates the HARQ feedback enablement and the SCI is associated with unicast transmission, a first PSFCH resource associated with the PSSCH does not successfully transmit an HARQ feedback due to LBT failure, and a second PSFCH resource successfully transmits a sidelink HARQ feedback, and a sidelink HARQ RTT timer associated with a sidelink process is started in a first slot at an end of the second PSFCH transmission.

Optionally, in the case where the SCI indicates the HARQ feedback enablement and the SCI is associated with unicast transmission, for a PSFCH resource before the PSFCH resource which successfully transmits the sidelink HARQ feedback first, the sidelink HARQ RTT timer may not be started.

Optionally, in the case where the SCI indicates the HARQ feedback enablement and the SCI is associated with unicast transmission, for a PSFCH resource behind a PSFCH resource which successfully transmits the sidelink HARQ feedback, the sidelink HARQ feedback may be sent continuously or may not be sent.

Optionally, the sidelink HARQ feedback may be sent continuously for the PSFCH resource behind the PSFCH resource which successfully transmits the sidelink HARQ feedback, the sidelink HARQ RTT timer may be restarted only for the PSFCH resource which successfully transmits an HARQ feedback, or the sidelink HARQ RTT timer may be restarted regardless of whether the HARQ feedback is successfully transmitted or not.

For example, a certain PSSCH is associated with three PSFCH resources, in the case where the SCI indicates the HARQ feedback enablement and the SCI is associated with unicast transmission, for a first PSFCH resource associated with the PSSCH, an HARQ feedback is transmitted unsuccessfully due to LBT failure, and a sidelink HARQ RTT timer associated with a sidelink process is not started in a first slot at an end of the first PSFCH resource, a second PSFCH resource successfully transmits a sidelink HARQ feedback, and the sidelink HARQ RTT timer associated with the sidelink process is started in a first slot at an end of the second PSFCH transmission. After that, a third PSFCH resource performs an HARQ feedback, if the HARQ feedback is transmitted unsuccessfully due to LBT failure, the sidelink HARQ RTT timer associated with the sidelink process is not restarted in a first slot at an end of the third PSFCH resource, or the sidelink HARQ RTT timer associated with the sidelink process is restarted in a first slot at an end of the third PSFCH resource, or the third PSFCH resource does not send an HARQ feedback. If the third PSFCH resource successfully transmits the HARQ feedback, the sidelink HARQ RTT timer associated with the sidelink process may be restarted in a first slot at an end of a third PSFCH transmission.

In embodiments of the present invention, the terminal may determine the PSFCH resource associated with the PSSCH and acquire the SCI associated with the PSSCH, in the case where the SCI indicates the HARQ feedback enablement and the SCI is associated with unicast transmission, for the PSFCH resource which successfully transmits the sidelink HARQ feedback first among PSFCH resources associated with the PSSCH, the sidelink HARQ RTT timer associated with the sidelink process is started in the first slot at the end of the PSFCH transmission which carries the sidelink HARQ feedback and successfully transmits the sidelink HARQ feedback first, thereby reducing the number of times the sidelink HARQ RTT timer is started, making the implementation simple.

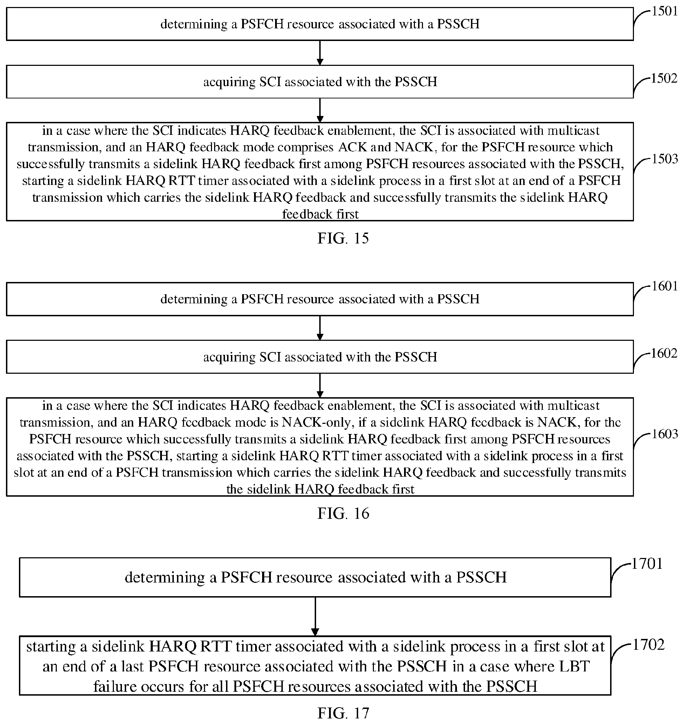

Referring to FIG. 15, which is a schematic flowchart of another method for starting or restarting a sidelink HARQ RTT timer according to embodiments of the present invention, the method is performed by a terminal. As shown in FIG. 15, the method may include but is not limited to the following steps.

In step 1501, a PSFCH resource associated with a PSSCH is determined.

In step 1502, SCI associated with the PSSCH is acquired.

In the present invention, the steps 1501-1502 each may be implemented in any manner as described in various embodiments of the present invention, which is not limited in the embodiments of the present invention and will not be elaborated again.

In step 1503, in a case where the SCI indicates HARQ feedback enablement, the SCI is associated with multicast transmission, and an HARQ feedback mode includes ACK and NACK, for a PSFCH resource which successfully transmits a sidelink HARQ feedback first among PSFCH resources associated with the PSSCH, a sidelink HARQ RTT timer associated with a sidelink process is started in a first slot at an end of a PSFCH transmission which carries the sidelink HARQ feedback and successfully transmits the sidelink HARQ feedback first.

In the present invention, in the case where the SCI indicates the HARQ feedback enablement, the SCI is associated with multicast transmission, and the HARQ feedback mode includes ACK and NACK, for the PSFCH resource which successfully transmits the sidelink HARQ feedback first among PSFCH resources associated with the PSSCH, the sidelink HARQ RTT timer associated with the sidelink process is started in the first slot at the end of the PSFCH transmission which carries the sidelink HARQ feedback and successfully transmits the sidelink HARQ feedback first. The sidelink process is associated with the PSSCH.

For example, a certain PSSCH is associated with three PSFCH resources, in the case where the SCI indicates the HARQ feedback enablement, the SCI is associated with multicast transmission, and the HARQ feedback mode includes ACK and NACK, a first PSFCH resource associated with the PSSCH does not successfully transmit an HARQ feedback due to LBT failure, and a second PSFCH resource successfully transmits a sidelink HARQ feedback, and a sidelink HARQ RTT timer associated with a sidelink process is started in a first slot at an end of the second PSFCH transmission.

Optionally, in the case where the SCI indicates the HARQ feedback enablement, the SCI is associated with multicast transmission, and the HARQ feedback mode includes ACK and NACK, for a PSFCH resource before the PSFCH resource which successfully transmits the sidelink HARQ feedback first, the sidelink HARQ RTT timer may not be started.

Optionally, in the case where the SCI indicates the HARQ feedback enablement, the SCI is associated with multicast transmission, and the HARQ feedback mode includes ACK and NACK, for a PSFCH resource behind a PSFCH resource which successfully transmits the sidelink HARQ feedback, the sidelink HARQ feedback may be sent continuously or may not be sent.

Optionally, the sidelink HARQ feedback may be sent continuously for the PSFCH resource behind the PSFCH resource which successfully transmits the sidelink HARQ feedback, the sidelink HARQ RTT timer may be started only for the PSFCH resource which successfully transmits an HARQ feedback, or the sidelink HARQ RTT timer may be started regardless of whether the HARQ feedback is successfully transmitted or not.

For example, a certain PSSCH is associated with three PSFCH resources, in the case where the SCI indicates the HARQ feedback enablement, the SCI is associated with multicast transmission, and the HARQ feedback mode includes ACK and NACK, for a first PSFCH resource associated with the PSSCH, an HARQ feedback is transmitted unsuccessfully due to LBT failure, and a sidelink HARQ RTT timer associated with a sidelink process is not started in a first slot at an end of the first PSFCH resource, a second PSFCH resource successfully transmits a sidelink HARQ feedback, and the sidelink HARQ RTT timer associated with the sidelink process is started in a first slot at an end of the second PSFCH transmission. After that, a third PSFCH resource performs an HARQ feedback, if the HARQ feedback is transmitted unsuccessfully due to LBT failure, the sidelink HARQ RTT timer associated with the sidelink process is not restarted in a first slot at an end of the third PSFCH resource, or the sidelink HARQ RTT timer associated with the sidelink process is restarted in a first slot at an end of the third PSFCH resource, or the third PSFCH resource does not send an HARQ feedback. If the third PSFCH resource successfully transmits the HARQ feedback, the sidelink HARQ RTT timer associated with the sidelink process may be restarted in a first slot at an end of a third PSFCH transmission.

In embodiments of the present invention, the terminal may determine the PSFCH resource associated with the PSSCH and acquire the SCI associated with the PSSCH, in the case where the SCI indicates the HARQ feedback enablement, the SCI is associated with multicast transmission, and the HARQ feedback mode includes ACK and NACK, for the PSFCH resource which successfully transmits the sidelink HARQ feedback first among PSFCH resources associated with the PSSCH, the sidelink HARQ RTT timer associated with the sidelink process is started in the first slot at the end of the PSFCH transmission which carries the sidelink HARQ feedback and successfully transmits the sidelink HARQ feedback first, thereby reducing the number of times the sidelink HARQ RTT timer is started, making the implementation simple.

Referring to FIG. 16, which is a schematic flowchart of another method for starting or restarting a sidelink HARQ RTT timer according to embodiments of the present invention, the method is performed by a terminal. As shown in FIG. 16, the method may include but is not limited to the following steps.

In step 1601, a PSFCH resource associated with a PSSCH is determined.

In step 1602, SCI associated with the PSSCH is acquired.

In the present invention, the steps 1601-1602 each may be implemented in any manner as described in various embodiments of the present invention, which is not limited in the embodiments of the present invention and will not be elaborated again.

In step 1603, in a case where the SCI indicates HARQ feedback enablement, the SCI is associated with multicast transmission, and an HARQ feedback mode is NACK-only, if a sidelink HARQ feedback is NACK, for a PSFCH resource which successfully transmits a sidelink HARQ feedback first among PSFCH resources associated with the PSSCH, a sidelink HARQ RTT timer associated with a sidelink process is started in a first slot at an end of a PSFCH transmission which carries the sidelink HARQ feedback and successfully transmits the sidelink HARQ feedback first.

In the present invention, in the case where the SCI indicates the HARQ feedback enablement, the SCI is associated with multicast transmission, and the HARQ feedback mode is NACK-only, if a sidelink HARQ feedback is NACK, for the PSFCH resource which successfully transmits the sidelink HARQ feedback first among PSFCH resources associated with the PSSCH, the sidelink HARQ RTT timer associated with the sidelink process is started in the first slot at the end of the PSFCH transmission which carries the sidelink HARQ feedback and successfully transmits the sidelink HARQ feedback first. The sidelink process is associated with the PSSCH.

For example, a certain PSSCH is associated with three PSFCH resources, in the case where the SCI indicates the HARQ feedback enablement, the SCI is associated with multicast transmission, and the HARQ feedback mode is NACK-only, if a sidelink HARQ feedback is NACK, a first PSFCH resource associated with the PSSCH does not successfully transmit an HARQ feedback due to LBT failure, and a second PSFCH resource successfully transmits a sidelink HARQ feedback, and a sidelink HARQ RTT timer associated with a sidelink process is started in a first slot at an end of the second PSFCH transmission.

Optionally, in the case where the SCI indicates the HARQ feedback enablement, the SCI is associated with multicast transmission, and the HARQ feedback mode is NACK-only, if a sidelink HARQ feedback is NACK, for a PSFCH resource before the PSFCH resource which successfully transmits the sidelink HARQ feedback first, the sidelink HARQ RTT timer may not be started.

Optionally, in the case where the SCI indicates the HARQ feedback enablement, the SCI is associated with multicast transmission, and the HARQ feedback mode is NACK-only, if a sidelink HARQ feedback is NACK, for a PSFCH resource behind a PSFCH resource which successfully transmits the sidelink HARQ feedback, the sidelink HARQ feedback may be sent continuously or may not be sent.

Optionally, the sidelink HARQ feedback may be sent continuously for the PSFCH resource behind the PSFCH resource which successfully transmits the sidelink HARQ feedback, the sidelink HARQ RTT timer may be started only for the PSFCH resource which successfully transmits an HARQ feedback, or the sidelink HARQ RTT timer may be started regardless of whether the HARQ feedback is successfully transmitted or not.

For example, a certain PSSCH is associated with three PSFCH resources, in the case where the SCI indicates the HARQ feedback enablement, the SCI is associated with multicast transmission, and the HARQ feedback mode is NACK-only, if a sidelink HARQ feedback is NACK, for a first PSFCH resource associated with the PSSCH, an HARQ feedback is transmitted unsuccessfully due to LBT failure, and a sidelink HARQ RTT timer associated with a sidelink process is not started in a first slot at an end of the first PSFCH resource, a second PSFCH resource successfully transmits a sidelink HARQ feedback, and the sidelink HARQ RTT timer associated with the sidelink process is started in a first slot at an end of the second PSFCH transmission. After that, a third PSFCH resource performs an HARQ feedback, if the HARQ feedback is transmitted unsuccessfully due to LBT failure, the sidelink HARQ RTT timer associated with the sidelink process is not restarted in a first slot at an end of the third PSFCH resource, or the sidelink HARQ RTT timer associated with the sidelink process is restarted in a first slot at an end of the third PSFCH resource, or the third PSFCH resource does not send an HARQ feedback. If the third PSFCH resource successfully transmits the HARQ feedback, the sidelink HARQ RTT timer associated with the sidelink process may be restarted in a first slot at an end of a third PSFCH transmission.

In embodiments of the present invention, the terminal may determine the PSFCH resource associated with the PSSCH and acquire the SCI associated with the PSSCH, in the case where the SCI indicates the HARQ feedback enablement, the SCI is associated with multicast transmission, and the HARQ feedback mode is NACK-only, if a sidelink HARQ feedback is NACK, for the PSFCH resource which successfully transmits the sidelink HARQ feedback first among PSFCH resources associated with the PSSCH, the sidelink HARQ RTT timer associated with the sidelink process is started in the first slot at the end of the PSFCH transmission which carries the sidelink HARQ feedback and successfully transmits the sidelink HARQ feedback first, thereby reducing the number of times the sidelink HARQ RTT timer is started, making the implementation simple.

Referring to FIG. 17, which is a schematic flowchart of another method for starting or restarting a sidelink HARQ RTT timer according to embodiments of the present invention, the method is performed by a terminal. As shown in FIG. 17, the method may include but is not limited to the following steps.

In step 1701, a PSFCH resource associated with a PSSCH is determined.

In the present invention, the step 1701 may be implemented in any manner as described in various embodiments of the present invention, which is not limited in the embodiments of the present invention and will not be elaborated again.

In step 1702, a sidelink HARQ RTT timer associated with a sidelink process is started in a first slot at an end of a last PSFCH resource associated with the PSSCH in a case where LBT failure occurs for all PSFCH resources associated with the PSSCH.

In the present invention, for the PSFCH resource associated with the PSSCH, LBT detection is performed before the HARQ feedback, and if LBT failure occurs for all PSFCH resources, the sidelink HARQ RTT timer associated with the sidelink process may be started in the first slot at the end of the last PSFCH resource associated with the PSSCH. The sidelink process may be associated with the PSSCH.

For example, a certain PSSCH is associated with three PSFCH resources, for a first PSFCH resource associated with the PSSCH, LBT detection is performed before an HARQ feedback, if LBT fails, the HARQ feedback is performed by a second PSFCH resource, and LBT detection is performed before the second PSFCH resource performs the HARQ feedback, if LBT fails, the HARQ feedback is performed by a third PSFCH resource, and LBT detection is performed before the third PSFCH resource performs the HARQ feedback, if LBT fails, a sidelink HARQ RTT timer associated with a sidelink process is started in a first slot at an end of the third PSFCH resource.

In embodiments of the present invention, the terminal may determine the PSFCH resource associated with the PSSCH, the sidelink HARQ RTT timer associated with the sidelink process is started in the first slot at the end of the last PSFCH resource associated with the PSSCH in the case where LBT failure occurs for all PSFCH resources associated with the PSSCH, thereby reducing the number of times the sidelink HARQ RTT timer is started, making the implementation simple.

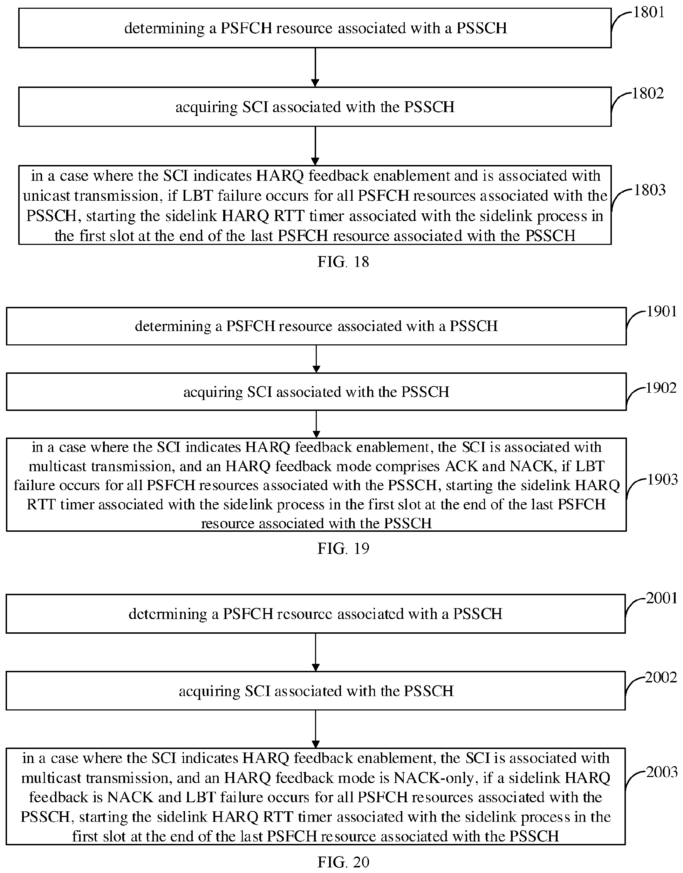

Referring to FIG. 18, which is a schematic flowchart of another method for starting or restarting a sidelink HARQ RTT timer according to embodiments of the present invention, the method is performed by a terminal. As shown in FIG. 18, the method may include but is not limited to the following steps.

In step 1801, a PSFCH resource associated with a PSSCH is determined.

In step 1802, SCI associated with the PSSCH is acquired.

In the present invention, the steps 1801-1802 each may be implemented in any manner as described in various embodiments of the present invention, which is not limited in the embodiments of the present invention and will not be elaborated again.

In step 1803, in a case where the SCI indicates HARQ feedback enablement and the SCI is associated with unicast transmission, if LBT failure occurs for all PSFCH resources associated with the PSSCH, a sidelink HARQ RTT timer associated with a sidelink process is started in a first slot at an end of a last PSFCH resource associated with the PSSCH.

In the present invention, in the case where the SCI indicates the HARQ feedback enablement and the SCI is associated with unicast transmission, for the PSFCH resource associated with the PSSCH, LBT detection is performed before the HARQ feedback, if LBT failure occurs for all PSFCH resources, the sidelink HARQ RTT timer associated with the sidelink process may be started in the first slot at the end of the last PSFCH resource associated with the PSSCH. The sidelink process may be associated with the PSSCH.

For example, a certain PSSCH is associated with three PSFCH resources, in the case where the SCI indicates the HARQ feedback enablement and the SCI is associated with unicast transmission, for a first PSFCH resource associated with the PSSCH, LBT detection is performed before an HARQ feedback, if LBT fails, the HARQ feedback is performed by a second PSFCH resource, and LBT detection is performed before the second PSFCH resource performs the HARQ feedback, if LBT fails, the HARQ feedback is performed by a third PSFCH resource, and LBT detection is performed before the third PSFCH resource performs the HARQ feedback, if LBT fails, a sidelink HARQ RTT timer associated with a sidelink process is started in a first slot at an end of the third PSFCH resource.

In embodiments of the present invention, the terminal may determine the PSFCH resource associated with the PSSCH and acquire the SCI associated with the PSSCH, and in the case where the SCI indicates the HARQ feedback enablement and the SCI is associated with unicast transmission, the sidelink HARQ RTT timer associated with the sidelink process is started in the first slot at the end of the last PSFCH resource associated with the PSSCH in the case where LBT failure occurs for all PSFCH resources associated with the PSSCH, thereby reducing the number of times the sidelink HARQ RTT timer is started, making the implementation simple.

Referring to FIG. 19, which is a schematic flowchart of another method for starting or restarting a sidelink HARQ RTT timer according to embodiments of the present invention, the method is performed by a terminal. As shown in FIG. 19, the method may include but is not limited to the following steps.

In step 1901, a PSFCH resource associated with a PSSCH is determined.

In step 1902, SCI associated with the PSSCH is acquired.

In the present invention, the steps 1901-1902 each may be implemented in any manner as described in various embodiments of the present invention, which is not limited in the embodiments of the present invention and will not be elaborated again.

In step 1903, in a case where the SCI indicates HARQ feedback enablement, the SCI is associated with multicast transmission, and an HARQ feedback mode includes ACK and NACK, if LBT failure occurs for all PSFCH resources associated with the PSSCH, a sidelink HARQ RTT timer associated with a sidelink process is started in a first slot at an end of a last PSFCH resource associated with the PSSCH.

In the present invention, the sidelink process is associated with the PSSCH.

In the present invention, for the case where the SCI indicates HARQ feedback enablement, the SCI is associated with multicast transmission, and the HARQ feedback mode includes ACK and NACK, if LBT failure occurs for all PSFCH resources associated with the PSSCH, the method for starting the sidelink HARQ RTT timer may refer to the method for starting the sidelink HARQ RTT timer in the case where the SCI indicates HARQ feedback enablement, the SCI is associated with unicast transmission, and LBT failure occurs for all PSFCH resources associated with the PSSCH, as described in the above embodiments, which will not be elaborated here.

In embodiments of the present invention, the terminal may determine the PSFCH resource associated with the PSSCH and acquire the SCI associated with the PSSCH, and in the case where the SCI indicates the HARQ feedback enablement, the SCI is associated with multicast transmission, and the HARQ feedback mode includes ACK and NACK, the sidelink HARQ RTT timer associated with the sidelink process is started in the first slot at the end of the last PSFCH resource associated with the PSSCH in the case where LBT failure occurs for all PSFCH resources associated with the PSSCH, thereby reducing the number of times the sidelink HARQ RTT timer is started, making the implementation simple.

Referring to FIG. 20, which is a schematic flowchart of another method for starting or restarting a sidelink HARQ RTT timer according to embodiments of the present invention, the method is performed by a terminal. As shown in FIG. 20, the method may include but is not limited to the following steps.

In step 2001, a PSFCH resource associated with a PSSCH is determined.

In step 2002, SCI associated with the PSSCH is acquired.

In the present invention, the steps 2001-2002 each may be implemented in any manner as described in various embodiments of the present invention, which is not limited in the embodiments of the present invention and will not be elaborated again.

In step 2003, in a case where the SCI indicates HARQ feedback enablement, the SCI is associated with multicast transmission, and an HARQ feedback mode is NACK-only, if a sidelink HARQ feedback is NACK and LBT failure occurs for all PSFCH resources associated with the PSSCH, a sidelink HARQ RTT timer associated with a sidelink process is started in a first slot at an end of a last PSFCH resource associated with the PSSCH.

In the present invention, the sidelink process is associated with the PSSCH.

In the present invention, for the case where the SCI indicates HARQ feedback enablement, the SCI is associated with multicast transmission, and the HARQ feedback mode is NACK-only, if the sidelink HARQ feedback is NACK and LBT failure occurs for all PSFCH resources associated with the PSSCH, the method for starting the sidelink HARQ RTT timer may refer to the method for starting the sidelink HARQ RTT timer in the case where the SCI indicates HARQ feedback enablement, the SCI is associated with unicast transmission, and LBT failure occurs for all PSFCH resources associated with the PSSCH, as described in the above embodiments, which will not be elaborated here.

In embodiments of the present invention, the terminal may determine the PSFCH resource associated with the PSSCH and acquire the SCI associated with the PSSCH, and in the case where the SCI indicates the HARQ feedback enablement, the SCI is associated with multicast transmission, and the HARQ feedback mode is NACK-only, if the sidelink HARQ feedback is NACK and LBT failure occurs for all PSFCH resources associated with the PSSCH, the sidelink HARQ RTT timer associated with the sidelink process is started in the first slot at the end of the last PSFCH resource associated with the PSSCH, thereby reducing the number of times the sidelink HARQ RTT timer is started, making the implementation simple.

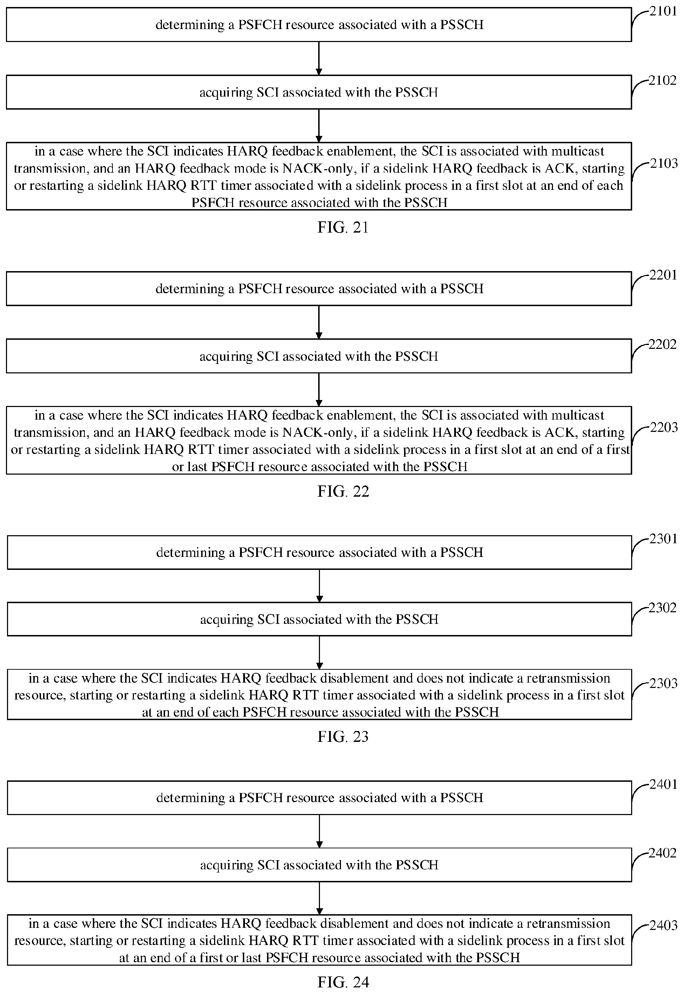

Referring to FIG. 21, which is a schematic flowchart of another method for starting or restarting a sidelink HARQ RTT timer according to embodiments of the present invention, the method is performed by a terminal. As shown in FIG. 21, the method may include but is not limited to the following steps.

In step 2101, a PSFCH resource associated with a PSSCH is determined.

In step 2102, SCI associated with the PSSCH is acquired.

In the present invention, the steps 2101-2102 each may be implemented in any manner as described in various embodiments of the present invention, which is not limited in the embodiments of the present invention and will not be elaborated again.

In step 2103, in a case where the SCI indicates HARQ feedback enablement, the SCI is associated with multicast transmission, and an HARQ feedback mode is NACK-only, if a sidelink HARQ feedback is ACK, a sidelink HARQ RTT timer associated with a sidelink process is started or restarted in a first slot at an end of each PSFCH resource associated with the PSSCH.

In the present invention, in the case where the SCI indicates HARQ feedback enablement, the SCI is associated with multicast transmission, and the HARQ feedback mode is NACK-only, if a sidelink HARQ feedback is ACK, there is no need to send an HARQ feedback, and the sidelink HARQ RTT timer associated with the sidelink process may be started or restarted in the first slot at the end of each PSFCH resource associated with the PSSCH. The sidelink process is associated with the PSSCH.

For example, a certain PSSCH is associated with three PSFCH resources, in the case where the SCI indicates HARQ feedback enablement, the SCI is associated with multicast transmission, and the HARQ feedback mode is NACK-only, if a sidelink HARQ feedback is ACK, a sidelink HARQ RTT timer associated with a sidelink process is started in a first slot at an end of a first PSFCH resource associated with the PSSCH, the sidelink HARQ RTT timer associated with the sidelink process is restarted in a first slot at an end of a second PSFCH resource, and the sidelink HARQ RTT timer associated with the sidelink process is restarted in a first slot at an end of a third PSFCH resource.

In embodiments of the present invention, the terminal may determine the PSFCH resource associated with the PSSCH and acquire the SCI associated with the PSSCH, and in the case where the SCI indicates the HARQ feedback enablement, the SCI is associated with multicast transmission, and the HARQ feedback mode is NACK-only, if the sidelink HARQ feedback is ACK, the sidelink HARQ RTT timer associated with the sidelink process is started or restarted in the first slot at the end of each PSFCH resource associated with the PSSCH, thereby increasing a duration during which the terminal is in a sleep state and saving resources.

Referring to FIG. 22, which is a schematic flowchart of another method for starting or restarting a sidelink HARQ RTT timer according to embodiments of the present invention, the method is performed by a terminal. As shown in FIG. 22, the method may include but is not limited to the following steps.

In step 2201, a PSFCH resource associated with a PSSCH is determined.

In step 2202, SCI associated with the PSSCH is acquired.

In the present invention, the steps 2201-2202 each may be implemented in any manner as described in various embodiments of the present invention, which is not limited in the embodiments of the present invention and will not be elaborated again.

In step 2203, in a case where the SCI indicates HARQ feedback enablement, the SCI is associated with multicast transmission, and an HARQ feedback mode is NACK-only, if a sidelink HARQ feedback is ACK, a sidelink HARQ RTT timer associated with a sidelink process is started or restarted in a first slot at an end of a first PSFCH resource or a last PSFCH resource associated with the PSSCH.

In the present invention, in the case where the SCI indicates HARQ feedback enablement, the SCI is associated with multicast transmission, and the HARQ feedback mode is NACK-only, if the sidelink HARQ feedback is ACK, there is no need to send an HARQ feedback, and the sidelink HARQ RTT timer associated with the sidelink process may be started or restarted in the first slot at the end of the first PSFCH resource or the last PSFCH resource associated with the PSSCH. The sidelink process is associated with the PSSCH.

For example, a certain PSSCH is associated with three PSFCH resources, in the case where the SCI indicates HARQ feedback enablement, the SCI is associated with multicast transmission, and the HARQ feedback mode is NACK-only, if the sidelink HARQ feedback is ACK, a sidelink HARQ RTT timer associated with a sidelink process is started or restarted in a first slot at an end of a first PSFCH resource or a third PSFCH resource associated with the PSSCH.

In embodiments of the present invention, the terminal may determine the PSFCH resource associated with the PSSCH and acquire the SCI associated with the PSSCH, and in the case where the SCI indicates the HARQ feedback enablement, the SCI is associated with multicast transmission, and the HARQ feedback mode is NACK-only, if the sidelink HARQ feedback is ACK, the sidelink HARQ RTT timer associated with the sidelink process is started or restarted in the first slot at the end of the first PSFCH resource or the last PSFCH resource associated with the PSSCH, thereby reducing the number of times the sidelink HARQ RTT timer is started, making the implementation simple.

Referring to FIG. 23, which is a schematic flowchart of another method for starting or restarting a sidelink HARQ RTT timer according to embodiments of the present invention, the method is performed by a terminal. As shown in FIG. 23, the method may include but is not limited to the following steps.

In step 2301, a PSFCH resource associated with a PSSCH is determined.

In step 2302, SCI associated with the PSSCH is acquired.

In the present invention, the steps 2301-2302 each may be implemented in any manner as described in various embodiments of the present invention, which is not limited in the embodiments of the present invention and will not be elaborated again.

In step 2303, in a case where the SCI indicates HARQ feedback disablement and does not indicate a retransmission resource, a sidelink HARQ RTT timer associated with a sidelink process is started or restarted in a first slot at an end of each PSFCH resource associated with the PSSCH.

In the present invention, if the SCI indicates the HARQ feedback disablement, it means that the terminal does not need to perform HARQ feedback on the PSSCH.

In the present invention, in the case where the SCI indicates the HARQ feedback disablement and does not indicate the retransmission resource, the sidelink HARQ RTT timer associated with the sidelink process may be started or restarted in the first slot at the end of each PSFCH resource associated with the PSSCH. The sidelink process is associated with the PSSCH.

For example, a certain PSSCH is associated with three PSFCH resources, in the case where the SCI indicates the HARQ feedback disablement and does not indicate the retransmission resource, a sidelink HARQ RTT timer associated with a sidelink process may be started in a first slot at an end of a first PSFCH resource, the sidelink HARQ RTT timer associated with the sidelink process may be restarted in a first slot at an end of a second PSFCH resource, and the sidelink HARQ RTT timer associated with the sidelink process may be restarted in a first slot at an end of a third PSFCH resource.

In embodiments of the present invention, the terminal may determine the PSFCH resource associated with the PSSCH and acquire the SCI associated with the PSSCH, and in the case where the SCI indicates the HARQ feedback disablement and does not indicate the retransmission resource, the sidelink HARQ RTT timer associated with the sidelink process is started or restarted in the first slot at the end of each PSFCH resource associated with the PSSCH, thereby increasing a duration during which the terminal is in a sleep state and saving resources.

Referring to FIG. 24, which is a schematic flowchart of another method for starting or restarting a sidelink HARQ RTT timer according to embodiments of the present invention, the method is performed by a terminal. As shown in FIG. 24, the method may include but is not limited to the following steps.

In step 2401, a PSFCH resource associated with a PSSCH is determined.

In step 2402, SCI associated with the PSSCH is acquired.

In the present invention, the steps 2401-2402 each may be implemented in any manner as described in various embodiments of the present invention, which is not limited in the embodiments of the present invention and will not be elaborated again.

In step 2403, in a case where the SCI indicates HARQ feedback disablement and does not indicate a retransmission resource, a sidelink HARQ RTT timer associated with a sidelink process is started or restarted in a first slot at an end of a first PSFCH resource or a last PSFCH resource associated with the PSSCH.

In the present invention, in the case where the SCI indicates the HARQ feedback disablement and does not indicate the retransmission resource, the sidelink HARQ RTT timer associated with the sidelink process may be started or restarted in the first slot at the end of the first PSFCH resource or the last PSFCH resource associated with the PSSCH. The sidelink process is associated with the PSSCH.

For example, a certain PSSCH is associated with three PSFCH resources, in the case where the SCI indicates the HARQ feedback disablement and does not indicate the retransmission resource, a sidelink HARQ RTT timer associated with a sidelink process may be started or restarted in a first slot at an end of a first PSFCH resource or a third PSFCH resource associated with the PSSCH.

In embodiments of the present invention, the terminal may determine the PSFCH resource associated with the PSSCH and acquire the SCI associated with the PSSCH, and in the case where the SCI indicates the HARQ feedback disablement and does not indicate the retransmission resource, the sidelink HARQ RTT timer associated with the sidelink process is started or restarted in the first slot at the end of the first PSFCH resource or the last PSFCH resource associated with the PSSCH, thereby reducing the number of times the sidelink HARQ RTT timer is started, making the implementation simple.

In order to facilitate understanding of the method for starting or restarting a sidelink HARQ RTT timer disclosed in the present invention, explanations are made with reference to the following examples.
1. An LBT result is not considered, the terminal starts or restarts the sidelink HARQ RTT timer for each PSFCH resource associated with the PSSCH.
   In a case where the HARQ feedback is enabled and the SCI is associated with unicast, or a case where the HARQ feedback is enabled, the SCI is associated with multicast and the HARQ feedback mode includes ACK and NACK, or a case where the HARQ feedback is enabled, the SCI is associated with multicast, the HARQ feedback mode is NACK-only and the HARQ feedback is NACK:
   If the HARQ feedback is sent unsuccessfully due to LBT failure, the sidelink HARQ RTT timer associated with this sidelink process is started or restarted in a first slot /symbol at an end of a PSFCH resource associated with this sidelink HARQ feedback.
   If LBT is successful, the sidelink HARQ RTT timer associated with this sidelink process is started or restarted in a first slot /symbol at an end of a PSFCH transmission carrying this sidelink HARQ feedback. The LBT is successful, and subsequent PSFCH resources may no longer send the HARQ feedback; or the LBT is successful, and subsequent PSFCH resources continues to send the HARQ feedback.
2. The terminal starts the sidelink HARQ RTT timer for a PSFCH resource associated with the PSSCH that successfully transmits the HARQ feedback first.
   Examples: in a case where the HARQ feedback is enabled and the SCI is associated with unicast, or a case where the HARQ feedback is enabled, the SCI is associated with multicast and the HARQ feedback mode includes ACK and NACK, or a case where the HARQ feedback is enabled, the SCI is associated with multicast, the HARQ feedback mode is NACK-only and the HARQ feedback is NACK:
   If LBT fails, the sidelink HARQ RTT timer associated with this sidelink process is not started or restarted in a first slot/symbol at an end of a PSFCH resource associated with this sidelink HARQ feedback.
   If LBT is successful, the sidelink HARQ RTT timer associated with this sidelink process is started or restarted in a first slot/symbol at an end of a PSFCH transmission carrying this sidelink HARQ feedback. The LBT is successful, and subsequent PSFCH resources may no longer send the HARQ feedback (the sidelink HARQ RTT timer is only started when the LBT is successful for the first time); or the LBT is successful, and subsequent PSFCH resources continues to send HARQ feedback.
3. LBT failure occurs on all PSFCH resources associated with the PSSCH, and the terminal starts the sidelink HARQ RTT timer for the last PSFCH resource associated with the PSSCH.
   Examples: in a case where the HARQ feedback is enabled and the SCI is associated with unicast, or a case where the HARQ feedback is enabled, the SCI is associated with multicast and the HARQ feedback mode includes ACK and NACK, or a case where the HARQ feedback is enabled, the SCI is associated with multicast, the HARQ feedback mode is NACK-only and the HARQ feedback is NACK:
   If LBT failure occurs on all PSFCH resources associated with the PSSCH, the sidelink HARQ RTTT timer associated with this sidelink process is started or restarted in a first slot/symbol at an end of the last PSFCH resource associated with this PSSCH.
4. If HARQ feedback is enabled, the SCI is associated with multicast and the selected HARQ feedback mode is negative-only acknowledgement, if the HARQ feedback is positive acknowledgement, the sidelink HARQ RTT timer associated with this sidelink process is started or restarted in a first slot/symbol at an end of each PSFCH resource associated with this sidelink HARQ feedback.
5. If HARQ feedback is enabled, the SCI is associated with multicast and the selected HARQ feedback mode is negative-only acknowledgement, if the HARQ feedback is positive acknowledgement, the sidelink HARQ RTT timer associated with this sidelink process is started or restarted in a first slot/symbol at an end of the first or last PSFCH resource associated with this sidelink HARQ feedback.
6. If HARQ feedback is disabled, and the SCI does not indicate one or more retransmission resources, the sidelink HARQ RTT timer associated with this sidelink process is started or restarted in a first slot/symbol at an end of each PSFCH resource associated with the PSSCH.
7. If HARQ feedback is disabled and the SCI does not indicate one or more retransmission resources, the sidelink HARQ RTT timer associated with this sidelink process is started or restarted in a first slot/symbol at an end of the first or last PSFCH resource associated with this PSSCH.

It should be noted that, in the present invention, when starting or restarting the sidelink HARQ RTT timer, the sidelink HARQ RTT timer may be started or restarted in the first slot at the end of the PSFCH resource or the end of the PSFCH transmission, or the sidelink HARQ RTT timer may be started or restarted in the first symbol at the end of the PSFCH resource or the end of the PSFCH transmission, or the sidelink HARQ RTT timer may be started or restarted at other granularities, which are not limited in the present invention.

It should be noted that, in the present invention, association with the PSSCH may also be referred to as sidelink grant association.

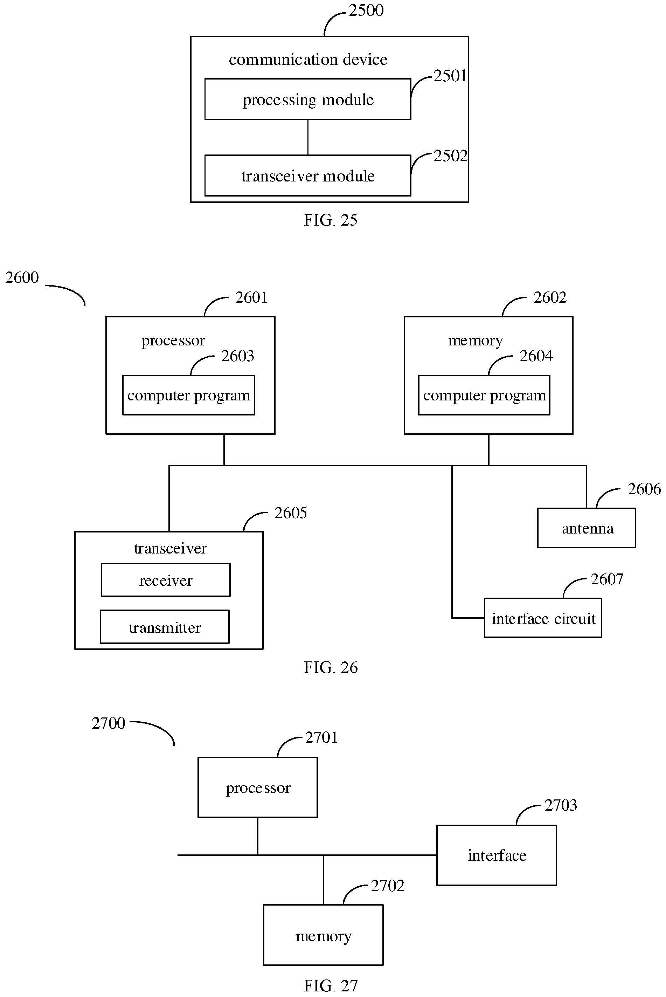

Referring to FIG. 25, FIG. 25 is a schematic block diagram of a communication device according to embodiments of the present invention. The communication device 2500 shown in FIG. 25 may include a processing module 2501 and a transceiver module 2502. The transceiver module 2502 may include a sending module and/or a receiving module, the sending module is configured to implement a sending function, the receiving module is configured to implement a receiving function, and the transceiver module 2502 may implement the sending function and/or the receiving function.

It may be understood that the communication device 2500 may be a terminal, a device in a terminal, or a device that may be used in conjunction with a terminal.

The communication device 2500 is at a side of the terminal, where:
The processing module 2501 is configured to: determine a physical sidelink feedback channel (PSFCH) resource associated with a physical sidelink shared channel (PSSCH); and start or restart a sidelink HARQ RTT timer for the PSFCH resource associated with the PSSCH.

Optionally, the processing module 2501 is configured to: start or restart a sidelink HARQ RTT timer for each PSFCH resource associated with the PSSCH.

Optionally, the communication device further includes: a transceiver module 2502 configured to acquire sidelink control information (SCI) associated with the PSSCH; and the processing module 2501 is configured to: in a case where the SCI indicates HARQ feedback enablement and the SCI is associated with unicast transmission, for each PSFCH resource associated with the PSSCH, if a sidelink HARQ feedback is transmitted unsuccessfully due to listen before talk (LBT) failure, start or restart a sidelink HARQ RTT timer associated with a sidelink process in a first slot at an end of the PSFCH resource associated with the sidelink HARQ feedback, where the sidelink process is associated with the PSSCH.

Optionally, the communication device further includes: a transceiver module 2502 configured to acquire sidelink control information (SCI) associated with the PSSCH; and the processing module 2501 is configured to: in a case where the SCI indicates HARQ feedback enablement, the SCI is associated with multicast transmission, and an HARQ feedback mode includes positive acknowledgment (ACK) and negative acknowledgment (NACK), for each PSFCH resource associated with the PSSCH, if a sidelink HARQ feedback is transmitted unsuccessfully due to LBT failure, start or restart a sidelink HARQ RTT timer associated with a sidelink process in a first slot at an end of the PSFCH resource associated with the sidelink HARQ feedback, where the sidelink process is associated with the PSSCH.

Optionally, the communication device further includes: a transceiver module 2502 configured to acquire sidelink control information (SCI) associated with the PSSCH; and the processing module 2501 is configured to: in a case where the SCI indicates HARQ feedback enablement, the SCI is associated with multicast transmission, and an HARQ feedback mode is negative-only acknowledgement (NACK-only), for each PSFCH resource associated with the PSSCH, if a sidelink HARQ feedback is NACK and is transmitted unsuccessfully due to LBT failure, start or restart a sidelink HARQ RTT timer associated with a sidelink process in a first slot at an end of the PSFCH resource associated with the sidelink HARQ feedback, where the sidelink process is associated with the PSSCH.

Optionally, the communication device further includes: a transceiver module 2502 configured to acquire sidelink control information (SCI) associated with the PSSCH; and the processing module 2501 is configured to: in a case where the SCI indicates HARQ feedback enablement and the SCI is associated with unicast transmission, for each PSFCH resource associated with the PSSCH, if a sidelink HARQ feedback is transmitted successfully, start or restart a sidelink HARQ RTT timer associated with a sidelink process in a first slot at an end of a PSFCH transmission carrying the sidelink HARQ feedback, where the sidelink process is associated with the PSSCH.

Optionally, the communication device further includes: a transceiver module 2502 configured to acquire sidelink control information (SCI) associated with the PSSCH; and the processing module 2501 is configured to: in a case where the SCI indicates HARQ feedback enablement, the SCI is associated with multicast transmission, and an HARQ feedback mode includes ACK and NACK, for each PSFCH resource associated with the PSSCH, if a sidelink HARQ feedback is transmitted successfully, start or restart a sidelink HARQ RTT timer associated with a sidelink process in a first slot at an end of a PSFCH transmission carrying the sidelink HARQ feedback, where the sidelink process is associated with the PSSCH.

Optionally, the communication device further includes: a transceiver module 2502 configured to acquire sidelink control information (SCI) associated with the PSSCH; and the processing module 2501 is configured to: in a case where the SCI indicates HARQ feedback enablement, the SCI is associated with multicast transmission, and an HARQ feedback mode is negative-only acknowledgement (NACK-only), for each PSFCH resource associated with the PSSCH, if a sidelink HARQ feedback is NACK and is transmitted successfully, start or restart a sidelink HARQ RTT timer associated with a sidelink process in a first slot at an end of a PSFCH transmission carrying the sidelink HARQ feedback, where the sidelink process is associated with the PSSCH.

Optionally, the processing module 2501 is further configured to not send a sidelink HARQ feedback for a PSFCH resource behind a PSFCH resource which successfully transmits a sidelink HARQ feedback.

Optionally, the processing module 2501 is configured to: start a sidelink HARQ RTT timer for a PSFCH resource which successfully transmits a sidelink HARQ feedback first among PSFCH resources associated with the PSSCH, where a sidelink process is associated with the PSSCH.

Optionally, the communication device further includes: a transceiver module 2502 configured to acquire sidelink control information (SCI) associated with the PSSCH; and the processing module 2501 is configured to: in a case where the SCI indicates HARQ feedback enablement and the SCI is associated with unicast transmission, if a sidelink HARQ feedback fails due to LBT failure, not start or not restart a sidelink HARQ RTT timer associated with a sidelink process in a first slot at an end of a PSFCH resource associated with the sidelink HARQ feedback, where the sidelink process is associated with the PSSCH.

Optionally, the communication device further includes: a transceiver module 2502 configured to acquire sidelink control information (SCI) associated with the PSSCH; and the processing module 2501 is configured to: in a case where the SCI indicates HARQ feedback enablement, the SCI is associated with multicast transmission, and an HARQ feedback mode includes ACK and NACK, if a sidelink HARQ feedback fails due to LBT failure, not start or not restart a sidelink HARQ RTT timer associated with a sidelink process in a first slot at an end of a PSFCH resource associated with the sidelink HARQ feedback, where the sidelink process is associated with the PSSCH.

Optionally, the communication device further includes: a transceiver module 2502 configured to acquire sidelink control information (SCI) associated with the PSSCH; and the processing module 2501 is configured to: in a case where the SCI indicates HARQ feedback enablement, the SCI is associated with multicast transmission, and an HARQ feedback mode is negative-only acknowledgement (NACK-only), if a sidelink HARQ feedback is NACK and fails LBT failure, not start or not restart a sidelink HARQ RTT timer associated with a sidelink process in a first slot at an end of a PSFCH resource associated with the sidelink HARQ feedback, where the sidelink process is associated with the PSSCH.

Optionally, the communication device further includes: a transceiver module 2502 configured to acquire sidelink control information (SCI) associated with the PSSCH; and the processing module 2501 is configured to: in a case where the SCI indicates HARQ feedback enablement and the SCI is associated with unicast transmission, for the PSFCH resource which successfully transmits a sidelink HARQ feedback first among PSFCH resources associated with the PSSCH, start a sidelink HARQ RTT timer associated with a sidelink process in a first slot at an end of a PSFCH transmission which carries the sidelink HARQ feedback and successfully transmits the sidelink HARQ feedback first, where the sidelink process is associated with the PSSCH.

Optionally, the communication device further includes: a transceiver module 2502 configured to acquire sidelink control information (SCI) associated with the PSSCH; and the processing module 2501 is configured to: in a case where the SCI indicates HARQ feedback enablement, the SCI is associated with multicast transmission, and an HARQ feedback mode includes ACK and NACK, for the PSFCH resource which successfully transmits a sidelink HARQ feedback first among PSFCH resources associated with the PSSCH, start a sidelink HARQ RTT timer associated with a sidelink process in a first slot at an end of a PSFCH transmission which carries the sidelink HARQ feedback and successfully transmits the sidelink HARQ feedback first, where the sidelink process is associated with the PSSCH.

Optionally, the communication device further includes: a transceiver module 2502 configured to acquire sidelink control information (SCI) associated with the PSSCH; and the processing module 2501 is configured to: in a case where the SCI indicates HARQ feedback enablement, the SCI is associated with multicast transmission, and an HARQ feedback mode is negative-only acknowledgement (NACK-only), if a sidelink HARQ feedback is NACK, for the PSFCH resource which successfully transmits a sidelink HARQ feedback first among PSFCH resources associated with the PSSCH, start a sidelink HARQ RTT timer associated with a sidelink process in a first slot at an end of a PSFCH transmission which carries the sidelink HARQ feedback and successfully transmits the sidelink HARQ feedback first, where the sidelink process is associated with the PSSCH.

Optionally, the processing module 2501 is further configured to: for a PSFCH resource behind a PSFCH resource which successfully transmits a sidelink HARQ feedback, send or not send a sidelink HARQ feedback.

Optionally, the processing module 2501 is configured to: start a sidelink HARQ RTT timer associated with a sidelink process in a first slot at an end of a last PSFCH resource associated with the PSSCH in a case where LBT failure occurs for all PSFCH resources associated with the PSSCH, where the sidelink process is associated with the PSSCH.

Optionally, the communication device further includes: a transceiver module 2502 configured to acquire sidelink control information (SCI) associated with the PSSCH; and the processing module 2501 is configured to: in a case where the SCI indicates HARQ feedback enablement and the SCI is associated with unicast transmission, if LBT failure occurs for all PSFCH resources associated with the PSSCH, start the sidelink HARQ RTT timer associated with the sidelink process in the first slot at the end of the last PSFCH resource associated with the PSSCH, where the sidelink process is associated with the PSSCH.

Optionally, the communication device further includes: a transceiver module 2502 configured to acquire sidelink control information (SCI) associated with the PSSCH; and the processing module 2501 is configured to: in a case where the SCI indicates HARQ feedback enablement, the SCI is associated with multicast transmission, and an HARQ feedback mode includes ACK and NACK, if LBT failure occurs for all PSFCH resources associated with the PSSCH, start the sidelink HARQ RTT timer associated with the sidelink process in the first slot at the end of the last PSFCH resource associated with the PSSCH, where the sidelink process is associated with the PSSCH.

Optionally, the communication device further includes: a transceiver module 2502 configured to acquire sidelink control information (SCI) associated with the PSSCH; and the processing module 2501 is configured to: in a case where the SCI indicates HARQ feedback enablement, the SCI is associated with multicast transmission, and an HARQ feedback mode is negative-only acknowledgement (NACK-only), if a sidelink HARQ feedback is NACK and LBT failure occurs for all PSFCH resources associated with the PSSCH, start the sidelink HARQ RTT timer associated with the sidelink process in the first slot at the end of the last PSFCH resource associated with the PSSCH, where the sidelink process is associated with the PSSCH.

Optionally, the communication device further includes: a transceiver module 2502 configured to acquire sidelink control information (SCI) associated with the PSSCH; and the processing module 2501 is configured to: in a case where the SCI indicates HARQ feedback enablement, the SCI is associated with multicast transmission, and an HARQ feedback mode is negative-only acknowledgement (NACK-only), if a sidelink HARQ feedback is ACK, start or restart a sidelink HARQ RTT timer associated with a sidelink process in a first slot at an end of each PSFCH resource associated with the PSSCH, where the sidelink process is associated with the PSSCH.

Optionally, the communication device further includes: a transceiver module 2502 configured to acquire sidelink control information (SCI) associated with the PSSCH; and the processing module 2501 is configured to: in a case where the SCI indicates HARQ feedback enablement, the SCI is associated with multicast transmission, and an HARQ feedback mode is NACK-only, if a sidelink HARQ feedback is ACK, start or restart a sidelink HARQ RTT timer associated with a sidelink process in a first slot at an end of a first PSFCH resource or a last PSFCH resource associated with the PSSCH, where the sidelink process is associated with the PSSCH.

Optionally, the communication device further includes: a transceiver module 2502 configured to acquire sidelink control information (SCI) associated with the PSSCH; and the processing module 2501 is configured to: in a case where the SCI indicates HARQ feedback disablement and does not indicate a retransmission resource, start or restart a sidelink HARQ RTT timer associated with a sidelink process in a first slot at an end of each PSFCH resource associated with the PSSCH, where the sidelink process is associated with the PSSCH.

In embodiments of the present invention, the terminal may determine the PSFCH resource associated with the PSSCH, and start or restart the sidelink HARQ RTT timer for the PSFCH resource associated with the PSSCH, so that the sidelink HARQ RTT timer may be started or restarted in the case where a plurality of PSFCH resources are introduced.

Referring to FIG. 26, FIG. 26 is a schematic block diagram of another communication device according to embodiments of the present invention. In FIG. 26, the communication device 2600 may be a network device, may also be a terminal, may also be a chip, a chip system, or a processor that supports the network device to implement the above method, or may also be a chip, a chip system, or a processor that supports the terminal to implement the above method. The device may be used to implement the methods as described in the above method embodiments, and for details, reference may be made to the descriptions on the above method embodiments.

The communication device 2600 may include one or more processors 2601. The processor 2601 may be a general-purpose processor or a special-purpose processor. For example, it may be a baseband processor or a central processing unit. The baseband processor may be configured to process a communication protocol and communication data, and the central processing unit may be configured to control a communication device (such as a base station, a baseband chip, a terminal, a terminal chip, a DU or a CU, etc.), execute computer programs, and process data of computer programs.

Optionally, the communication device 2600 may further include one or more memories 2602 that may have stored therein computer programs 2604. The processor 2601 executes the computer programs 2604 to cause the communication device 2600 to implement the methods as described in the above method embodiments. Optionally, the memory 2602 may have stored therein data. The communication device 2600 and the memory 2602 may be set separately or integrated together.

Optionally, the communication device 2600 may further include a transceiver 2605 and an antenna 2606. The transceiver 2605 may be called a transceiver element, a transceiver machine, a transceiver circuit or the like, for implementing a transceiver function. The transceiver 2605 may include a receiver and a transmitter. The receiver may be called a receiving machine, a receiving circuit or the like, for implementing a receiving function. The transmitter may be called a sending machine, a sending circuit or the like for implementing a sending function.

Optionally, the communication device 2600 may further include one or more interface circuits 2607. The interface circuit 2607 is configured to receive code instructions and transmit the code instructions to the processor 2601. The processor 2601 runs the code instructions to enable the communication device 2600 to execute the methods as described in the foregoing method embodiments.

The communication device 2600 is the terminal: the processor 2601 is configured to execute the steps 201-202 in FIG. 2, etc.

In an implementation manner, the processor 2601 may include the transceiver configured to implement receiving and sending functions. For example, the transceiver may be a transceiver circuit, an interface, or an interface circuit. The transceiver circuit, the interface or the interface circuit configured to implement the receiving and sending functions may be separated or may be integrated together. The above transceiver circuit, interface or interface circuit may be configured to read and write codes/data, or the above transceiver circuit, interface or interface circuit may be configured to transmit or transfer signals.

In an implementation manner, the processor 2601 may have stored therein computer programs 2603 that, when run on the processor 2601, causes the communication device 2600 to implement the method as described in the foregoing method embodiments. The computer programs 2603 may be solidified in the processor 2601, and in this case, the processor 2601 may be implemented by hardware.

In an implementation manner, the communication device 2600 may include a circuit, and the circuit may implement the sending, receiving or communicating function in the foregoing method embodiments. The processor and the transceiver described in the present invention may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process technologies, such as a complementary metal oxide semiconductor (CMOS), an nMetal-oxide-semiconductor (NMOS), a P-type metal oxide semiconductor (PMOS), a bipolar junction transistor (BJT), a bipolar CMOS (BiCMOS), silicon germanium (SiGe), gallium arsenide (GaAs), etc.

The communication device described in the above embodiments may be the network device or the terminal, but the scope of the communication device described in the present invention is not limited thereto, and a structure of the communication device is not limited by FIG. 26. The communication device may be a stand-alone device or may be a part of a larger device. For example, the communication device may be:
(1) a stand-alone integrated circuit (IC), or a chip, or a chip system or a subsystem;
(2) a set of one or more ICs, optionally, the set of ICs may also include a storage component for storing data and computer programs;
(3) an ASIC, such as a modem;
(4) a module that may be embedded in other devices;
(5) a receiver, a terminal, an intelligent terminal, a cellular phone, a wireless device, a handheld machine, a mobile unit, a vehicle device, a network device, a cloud device, an artificial intelligence device, etc.;
(6) others.

For the case where the communication device may be a chip or a chip system, reference may be made to a schematic structural diagram of the chip shown in FIG. 27. The chip 2700 shown in FIG. 27 includes a processor 2701 and an interface 2703. In the chip, one or more processors 2701 may be provided, and more than one interface 2703 may be provided.

For the case where the chip is used to implement functions of the terminal in embodiments of the present invention: the interface 2703 is configured to execute the step 402 in FIG. 4, the step 502 in FIG. 5, etc.

Optionally, the chip 2700 further includes a memory 2702 for storing necessary computer programs and data.

Those skilled in the art may also understand that various illustrative logical blocks and steps listed in the embodiments of the present invention may be implemented by electronic hardware, computer software, or a combination thereof. Whether such functions are implemented by hardware or software depends on specific applications and design requirements of an overall system. For each specific application, those skilled in the art may use various methods to implement the described functions, but such implementation should not be understood as beyond the protection scope of the embodiments of the present invention.

The present invention also provides a readable storage medium having stored therein instructions that, when executed by a computer, cause functions of any of the above method embodiments to be implemented.

The present invention also provides a computer program product that, when executed by a computer, causes functions of any of the above method embodiments to be implemented.

The above embodiments may be implemented in whole or in part by software, hardware, firmware or any combination thereof. When implemented using software, the above embodiments may be implemented in whole or in part in a form of the computer program product. The computer program product includes one or more computer programs. When the computer program is loaded and executed on the computer, all or part of the processes or functions according to the embodiments of the present invention will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website site, computer, server or data center to another website site, computer, server or data center in a wired manner (such as via a coaxial cable, an optical fiber, a digital subscriber line (DSL)) or a wireless manner (such as via infrared, wireless, or microwave, etc.). The computer-readable storage medium may be any available medium that can be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)) etc.

Those of ordinary skill in the art can understand that the first, second, and other numeral numbers involved in the present invention are only for convenience of description, and are not intended to limit the scope of the embodiments of the present invention, nor are they intended to represent a sequential order.

The term "at least one" used in the present invention may also be described as one or more, and the term "a plurality of" may cover two, three, four or more, which are not limited in the present invention. In embodiments of the present invention, for a certain kind of technical features, the technical features in this kind of technical features are distinguished by terms like "first", "second", "third", "A", "B", "C" and "D", etc., and these technical features described with the "first", "second", "third", "A", "B", "C" and "D" have no order of priority and have no order of size.

The correspondence shown in each table in the present invention may be configured or predefined. The values of various information in each table are just examples, and may be configured as other values, which are not limited in the present invention. When configuring a correspondence between the information and various parameters, it is not necessary to configure all the correspondences shown in the tables. For example, the correspondences shown in some rows of a table in the present invention may not be configured. For another example, appropriate deformations or adjustments (such as splitting, merging, and so on) can be made based on the above table. The names of parameters shown in the titles of the above tables may also adopt other names understandable by the communication device, and the values or representations of the parameters may also be other values or representations understandable by the communication device. When the above tables are implemented, other data structures may also be used, for example, arrays, queues, containers, stacks, linear tables, pointers, linked lists, trees, graphs, structural body, classes, heaps, or hash tables may be used.

## Claims

1. A method for starting or restarting a sidelink hybrid automatic repeat request round-trip time (HARQ RTT) timer, performed by a terminal, comprising:
determining a physical sidelink feedback channel (PSFCH) resource associated with a physical sidelink shared channel (PSSCH); and
starting or restarting a sidelink HARQ RTT timer for the PSFCH resource associated with the PSSCH.

2. The method according to claim 1, wherein starting or restarting a sidelink HARQ RTT timer for the PSFCH resource associated with the PSSCH comprises:
starting or restarting a sidelink HARQ RTT timer for each PSFCH resource associated with the PSSCH.

3. The method according to claim 2, wherein starting or restarting a sidelink HARQ RTT timer for the PSFCH resource associated with the PSSCH comprises:
acquiring sidelink control information (SCI) associated with the PSSCH; and
in a case where the SCI indicates HARQ feedback enablement and the SCI is associated with unicast transmission, for each PSFCH resource associated with the PSSCH, if a sidelink HARQ feedback is transmitted unsuccessfully due to listen before talk (LBT) failure, starting or restarting a sidelink HARQ RTT timer associated with a sidelink process in a first slot at an end of the PSFCH resource associated with the sidelink HARQ feedback, wherein the sidelink process is associated with the PSSCH.

4. The method according to claim 2, wherein starting or restarting a sidelink HARQ RTT timer for each PSFCH resource associated with the PSSCH comprises:
acquiring sidelink control information (SCI) associated with the PSSCH; and
in a case where the SCI indicates HARQ feedback enablement, the SCI is associated with multicast transmission, and an HARQ feedback mode comprises positive acknowledgment (ACK) and negative acknowledgment (NACK), for each PSFCH resource associated with the PSSCH, if a sidelink HARQ feedback is transmitted unsuccessfully due to listen before talk (LBT) failure, starting or restarting a sidelink HARQ RTT timer associated with a sidelink process in a first slot at an end of the PSFCH resource associated with the sidelink HARQ feedback, wherein the sidelink process is associated with the PSSCH.

5. The method according to claim 2, wherein starting or restarting a sidelink HARQ RTT timer for each PSFCH resource associated with the PSSCH comprises:
acquiring sidelink control information (SCI) associated with the PSSCH; and
in a case where the SCI indicates HARQ feedback enablement, the SCI is associated with multicast transmission, and an HARQ feedback mode is negative-only acknowledgement (NACK-only), for each PSFCH resource associated with the PSSCH, if a sidelink HARQ feedback is NACK and is transmitted unsuccessfully due to listen before talk (LBT) failure, starting or restarting a sidelink HARQ RTT timer associated with a sidelink process in a first slot at an end of the PSFCH resource associated with the sidelink HARQ feedback, wherein the sidelink process is associated with the PSSCH.

6. The method according to claim 2, wherein starting or restarting a sidelink HARQ RTT timer for each PSFCH resource associated with the PSSCH comprises:
acquiring sidelink control information (SCI) associated with the PSSCH; and
in a case where the SCI indicates HARQ feedback enablement and the SCI is associated with unicast transmission, for each PSFCH resource associated with the PSSCH, if a sidelink HARQ feedback is transmitted successfully, starting or restarting a sidelink HARQ RTT timer associated with a sidelink process in a first slot at an end of a PSFCH transmission carrying the sidelink HARQ feedback, wherein the sidelink process is associated with the PSSCH.

7. The method according to claim 2, wherein starting or restarting a sidelink HARQ RTT timer for each PSFCH resource associated with the PSSCH comprises:
acquiring sidelink control information (SCI) associated with the PSSCH; and
in a case where the SCI indicates HARQ feedback enablement, the SCI is associated with multicast transmission, and an HARQ feedback mode comprises positive acknowledgment (ACK) and negative acknowledgment (NACK), for each PSFCH resource associated with the PSSCH, if a sidelink HARQ feedback is transmitted successfully, starting or restarting a sidelink HARQ RTT timer associated with a sidelink process in a first slot at an end of a PSFCH transmission carrying the sidelink HARQ feedback, wherein the sidelink process is associated with the PSSCH.

8. The method according to claim 2, wherein starting or restarting a sidelink HARQ RTT timer for each PSFCH resource associated with the PSSCH comprises:
acquiring sidelink control information (SCI) associated with the PSSCH; and
in a case where the SCI indicates HARQ feedback enablement, the SCI is associated with multicast transmission, and an HARQ feedback mode is negative-only acknowledgement (NACK-only), for each PSFCH resource associated with the PSSCH, if a sidelink HARQ feedback is NACK and is transmitted successfully, starting or restarting a sidelink HARQ RTT timer associated with a sidelink process in a first slot at an end of a PSFCH transmission carrying the sidelink HARQ feedback, wherein the sidelink process is associated with the PSSCH.

9. The method according to any one of claims 6 to 8, further comprising:
not sending a sidelink HARQ feedback for a PSFCH resource behind a PSFCH resource which successfully transmits a sidelink HARQ feedback.

10. The method according to claim 1, wherein starting or restarting a sidelink HARQ RTT timer for the PSFCH resource associated with the PSSCH comprises:
starting a sidelink HARQ RTT timer for a PSFCH resource which successfully transmits a sidelink HARQ feedback first among PSFCH resources associated with the PSSCH, wherein a sidelink process is associated with the PSSCH.

11. The method according to claim 10, wherein starting a sidelink HARQ RTT timer for a PSFCH resource which successfully transmits a sidelink HARQ feedback first among PSFCH resources associated with the PSSCH comprises:
acquiring sidelink control information (SCI) associated with the PSSCH; and
in a case where the SCI indicates HARQ feedback enablement and the SCI is associated with unicast transmission, if a sidelink HARQ feedback fails due to listen before talk (LBT) failure, not starting or not restarting a sidelink HARQ RTT timer associated with a sidelink process in a first slot at an end of a PSFCH resource associated with the sidelink HARQ feedback, wherein the sidelink process is associated with the PSSCH.

12. The method according to claim 10, wherein starting a sidelink HARQ RTT timer for a PSFCH resource which successfully transmits a sidelink HARQ feedback first among PSFCH resources associated with the PSSCH comprises:
acquiring sidelink control information (SCI) associated with the PSSCH; and
in a case where the SCI indicates HARQ feedback enablement, the SCI is associated with multicast transmission, and an HARQ feedback mode comprises positive acknowledgment (ACK) and negative acknowledgment (NACK), if a sidelink HARQ feedback fails due to listen before talk (LBT) failure, not starting or not restarting a sidelink HARQ RTT timer associated with a sidelink process in a first slot at an end of a PSFCH resource associated with the sidelink HARQ feedback, wherein the sidelink process is associated with the PSSCH.

13. The method according to claim 10, wherein starting a sidelink HARQ RTT timer for a PSFCH resource which successfully transmits a sidelink HARQ feedback first among PSFCH resources associated with the PSSCH comprises:
acquiring sidelink control information (SCI) associated with the PSSCH; and
in a case where the SCI indicates HARQ feedback enablement, the SCI is associated with multicast transmission, and an HARQ feedback mode is negative-only acknowledgement (NACK-only), if a sidelink HARQ feedback is NACK and fails due to listen before talk (LBT) failure, not starting or not restarting a sidelink HARQ RTT timer associated with a sidelink process in a first slot at an end of a PSFCH resource associated with the sidelink HARQ feedback, wherein the sidelink process is associated with the PSSCH.

14. The method according to claim 10, wherein starting a sidelink HARQ RTT timer for a PSFCH resource which successfully transmits a sidelink HARQ feedback first among PSFCH resources associated with the PSSCH comprises:
acquiring sidelink control information (SCI) associated with the PSSCH; and
in a case where the SCI indicates HARQ feedback enablement and the SCI is associated with unicast transmission, for the PSFCH resource which successfully transmits a sidelink HARQ feedback first among PSFCH resources associated with the PSSCH, starting a sidelink HARQ RTT timer associated with a sidelink process in a first slot at an end of a PSFCH transmission which carries the sidelink HARQ feedback and successfully transmits the sidelink HARQ feedback first, wherein the sidelink process is associated with the PSSCH.

15. The method according to claim 10, wherein starting a sidelink HARQ RTT timer for a PSFCH resource which successfully transmits a sidelink HARQ feedback first among PSFCH resources associated with the PSSCH comprises:
acquiring sidelink control information (SCI) associated with the PSSCH; and
in a case where the SCI indicates HARQ feedback enablement, the SCI is associated with multicast transmission, and an HARQ feedback mode comprises positive acknowledgment (ACK) and negative acknowledgment (NACK), for the PSFCH resource which successfully transmits a sidelink HARQ feedback first among PSFCH resources associated with the PSSCH, starting a sidelink HARQ RTT timer associated with a sidelink process in a first slot at an end of a PSFCH transmission which carries the sidelink HARQ feedback and successfully transmits the sidelink HARQ feedback first, wherein the sidelink process is associated with the PSSCH.

16. The method according to claim 10, wherein starting a sidelink HARQ RTT timer for a PSFCH resource which successfully transmits a sidelink HARQ feedback first among PSFCH resources associated with the PSSCH comprises:
acquiring sidelink control information (SCI) associated with the PSSCH; and
in a case where the SCI indicates HARQ feedback enablement, the SCI is associated with multicast transmission, and an HARQ feedback mode is negative-only acknowledgement (NACK-only), if a sidelink HARQ feedback is NACK, for the PSFCH resource which successfully transmits a sidelink HARQ feedback first among PSFCH resources associated with the PSSCH, starting a sidelink HARQ RTT timer associated with a sidelink process in a first slot at an end of a PSFCH transmission which carries the sidelink HARQ feedback and successfully transmits the sidelink HARQ feedback first, wherein the sidelink process is associated with the PSSCH.

17. The method according to any one of claims 11 to 16, further comprising:
for a PSFCH resource behind a PSFCH resource which successfully transmits a sidelink HARQ feedback, sending or not sending a sidelink HARQ feedback.

18. The method according to claim 1, wherein starting or restarting a sidelink HARQ RTT timer for the PSFCH resource associated with the PSSCH comprises:
starting a sidelink HARQ RTT timer associated with a sidelink process in a first slot at an end of a last PSFCH resource associated with the PSSCH in a case where LBT failure occurs for all PSFCH resources associated with the PSSCH, wherein the sidelink process is associated with the PSSCH.

19. The method according to claim 18, wherein starting a sidelink HARQ RTT timer in a first slot at an end of a last PSFCH resource associated with the PSSCH in the case where LBT failure occurs for all PSFCH resources associated with the PSSCH comprises:
acquiring sidelink control information (SCI) associated with the PSSCH; and
in a case where the SCI indicates HARQ feedback enablement and the SCI is associated with unicast transmission, if LBT failure occurs for all PSFCH resources associated with the PSSCH, starting the sidelink HARQ RTT timer associated with the sidelink process in the first slot at the end of the last PSFCH resource associated with the PSSCH, wherein the sidelink process is associated with the PSSCH.

20. The method according to claim 18, wherein starting a sidelink HARQ RTT timer in a first slot at an end of a last PSFCH resource associated with the PSSCH in the case where LBT failure occurs for all PSFCH resources associated with the PSSCH comprises:
acquiring sidelink control information (SCI) associated with the PSSCH; and
in a case where the SCI indicates HARQ feedback enablement, the SCI is associated with multicast transmission, and an HARQ feedback mode comprises positive acknowledgment (ACK) and negative acknowledgment (NACK), if LBT failure occurs for all PSFCH resources associated with the PSSCH, starting the sidelink HARQ RTT timer associated with the sidelink process in the first slot at the end of the last PSFCH resource associated with the PSSCH, wherein the sidelink process is associated with the PSSCH.

21. The method according to claim 18, wherein starting a sidelink HARQ RTT timer in a first slot at an end of a last PSFCH resource associated with the PSSCH in the case where LBT failure occurs for all PSFCH resources associated with the PSSCH comprises:
acquiring sidelink control information (SCI) associated with the PSSCH; and
in a case where the SCI indicates HARQ feedback enablement, the SCI is associated with multicast transmission, and an HARQ feedback mode is negative-only acknowledgement (NACK-only), if a sidelink HARQ feedback is NACK and LBT failure occurs for all PSFCH resources associated with the PSSCH, starting the sidelink HARQ RTT timer associated with the sidelink process in the first slot at the end of the last PSFCH resource associated with the PSSCH, wherein the sidelink process is associated with the PSSCH.

22. The method according to claim 1, wherein starting or restarting a sidelink HARQ RTT timer for the PSFCH resource associated with the PSSCH comprises:
acquiring sidelink control information (SCI) associated with the PSSCH; and
in a case where the SCI indicates HARQ feedback enablement, the SCI is associated with multicast transmission, and an HARQ feedback mode is negative-only acknowledgement (NACK-only), if a sidelink HARQ feedback is ACK, starting or restarting a sidelink HARQ RTT timer associated with a sidelink process in a first slot at an end of each PSFCH resource associated with the PSSCH, wherein the sidelink process is associated with the PSSCH.

23. The method according to claim 1, wherein starting or restarting a sidelink HARQ RTT timer for the PSFCH resource associated with the PSSCH comprises:
acquiring sidelink control information (SCI) associated with the PSSCH; and
in a case where the SCI indicates HARQ feedback enablement, the SCI is associated with multicast transmission, and an HARQ feedback mode is negative-only acknowledgement (NACK-only), if a sidelink HARQ feedback is ACK, starting or restarting a sidelink HARQ RTT timer associated with a sidelink process in a first slot at an end of a first PSFCH resource or a last PSFCH resource associated with the PSSCH, wherein the sidelink process is associated with the PSSCH.

24. The method according to claim 1, wherein starting or restarting a sidelink HARQ RTT timer for the PSFCH resource associated with the PSSCH comprises:
acquiring sidelink control information (SCI) associated with the PSSCH; and
in a case where the SCI indicates HARQ feedback disablement and does not indicate a retransmission resource, starting or restarting a sidelink HARQ RTT timer associated with a sidelink process in a first slot at an end of each PSFCH resource associated with the PSSCH, wherein the sidelink process is associated with the PSSCH.

25. The method according to claim 1, wherein starting or restarting a sidelink HARQ RTT timer for the PSFCH resource associated with the PSSCH comprises:
acquiring sidelink control information (SCI) associated with the PSSCH; and
in a case where the SCI indicates HARQ feedback disablement and does not indicate a retransmission resource, starting or restarting a sidelink HARQ RTT timer associated with a sidelink process in a first slot at an end of a first PSFCH resource or a last PSFCH resource associated with the PSSCH, wherein the sidelink process is associated with the PSSCH.

26. A communication device, comprising:
a processing module, configured to: determine a physical sidelink feedback channel (PSFCH) resource associated with a physical sidelink shared channel (PSSCH); and start or restart a sidelink HARQ RTT timer for the PSFCH resource associated with the PSSCH.

27. A communication device, comprising:
a processor; and
a memory, having stored therein computer programs,
wherein the processor is configured to execute the computer programs stored in the memory to cause the device to perform the method according to any one of claims 1 to 25.

28. A computer-readable storage medium, having stored therein computer instructions that, when executed, cause the method according to any one of claims 1 to 25 to be implemented.
